# EUROPEAN PATENT APPLICATION

(11) **EP 4 742 002 A1**
(43) Date of publication of application: **13.05.2026**
(21) Application number: 25214418.3
(22) Date of filing: 07.11.2025
(51) Int. Cl.: G06F 1/324, G06F 1/3287, H04L 41/147

(54) **EFFICIENT POWER MANAGEMENT OF NETWORK DEVICES**

(30) Priority: 08.11.2024 IN 202441085871; 07.10.2025 US 202519352233
(71) Applicant: Juniper Networks, Inc., Sunnyvale, CA 94089 (US)
(72) Inventor: KOMMULA, Raja, Sunnyvale, 94089 (US); SUNKADA, Ganesh Byagoti Matad, Sunnyvale, 94089 (US); SRIDHAR, Thayumanavan, Sunnyvale, 94089 (US); YAVATKAR, Raj, Sunnyvale, 94089 (US); KANNIAPPAN, Murugan, Sunnyvale, 94089 (US)
(74) Representative: D Young & Co LLP

(57) **Abstract**

Techniques are disclosed for improved energy efficiency of network devices of a network system. For example, a computing system obtains time series data comprising information about computing devices of a computer network. The computing devices access other devices of the computer network via network devices that exchange network traffic of the computing devices. The computing system applies a machine learning system, trained with historical time series data, to the obtained time series data to predict a requirement of one or more of the network devices for exchanging network traffic of the computing devices for a next time interval. The computing system adjusts, based at least in part on the predicted requirement for the next time interval, operation of the one or more of the network devices.

## Description

This application claims the benefit U.S. Utility Patent Application 19/352,233, which was filed on October 7, 2025, which claims the benefit of India Provisional Patent Application No. 202441085871, which was filed on November 8, 2024, the entire content of each of which are incorporated herein by reference.

### TECHNICAL FIELD

This disclosure relates to computer networks and, more specifically, to improving energy efficiency in computer networks.

### BACKGROUND

A computer network is a collection of interconnected network devices that can exchange data and share resources. In a packet-based network, such as an Ethernet network, the network devices communicate data by dividing the data into variable-length blocks called packets, which are individually routed across the network from a source device to a destination device. The destination device extracts the data from the packets and assembles the data into its original form.

Certain network devices or nodes, such as routers, maintain routing information that describes routes through the network. Routers often have many central processing unit (CPU) cores and require a significant amount of memory and energy usage to support various tasks, such as management of the control plane and routing packets. In some cases, a router may have more than one hundred CPU cores, and many hundreds of gigabytes of random access memory.

As enterprise networks, service provider networks, other types of networks, and data centers become larger, their overall energy usage increases. Some large data centers require a significant amount of power-enough to power many homes simultaneously. Data centers may also run application workloads that are compute- and data-intensive, such as cryptocurrency mining and machine learning applications, and consume a significant amount of energy. To be more energy efficient, some networks may source energy from renewable energy sources. However, the configuration of networks, data centers, and/or the applications that run on such networks are constantly changing and networks are often unable to dynamically increase their energy efficiency.

### SUMMARY

Particular aspects are set out in the appended independent claims. Various optional embodiments are set out in the dependent claims.

This disclosure describes techniques for improving and/or reducing power requirements and energy consumption by network devices that exchange network traffic of computing devices of a computing network. As an example, this may be useful in a data center network, so that the data center consumes less energy, while devices of the network maintain expected performance levels.

In an example of the techniques of the disclosure, a power management controller of a computing system obtains time series data. The time series data comprises information about the computing devices of the computer network. In some examples, the information indicates, e.g., a power throttling state of the computing devices, a resource utilization, such as a central processing unit (CPU) usage or a graphic processing unit (GPU) usage, a network traffic intensity of one or more applications executed by the computing devices, an operating channel frequency on which the computing devices operate, or network usage patterns of the computing devices. The power management controller collects such metrics for each computing device of the computing devices and for each time interval of a plurality of time intervals. The power management controller applies a machine learning system, trained with historical time series data for the computing devices and the network devices, to the obtained time series data to predict a requirement for exchanging network traffic of each of the computing devices for a next time interval.

Based at least in part on the predicted requirement for the next time interval, the power management controller adjusts operation of one or more network devices of the network devices. For example, based on a prediction that the computing devices may generate less network traffic over the next time interval as compared to a previous time interval, the power management controller described herein may adjust operation of one or more network devices of the network devices so as to decrease performance, such as by reducing a network throughput, deactivating one or more radios, or reducing an energy consumption of the one or more network devices, etc. In a similar fashion, based on a prediction that the computing devices may generate more network traffic over the next time interval as compared to a previous time interval, the power management controller may adjust operation of one or more network devices of the network devices so as to increase performance, such as by increasing a network throughput, activating one or more radios, or increasing an energy consumption of the one or more network devices.

The techniques of the disclosure may provide specific improvements to the computer-related field of computer networking, and more specifically, power management of networking devices, that may have one or more practical applications. In particular, techniques described herein may help manage power in a computing system to ameliorate inefficiencies stemming from disparities between the over-powered performance capabilities of network devices of a computer network (e.g., routers, access points (APs), switches, gateways, etc.) and current performance requirements of the computing devices of the computer network.

In contrast with network devices that would operate at full power and maximum capability even during periods of low usage, and cause inefficient energy usage where such performance characteristics are not needed to satisfy the requirements of the computing devices served by such network devices, a power controller as described herein may reduce the power requirement of a network device, and therefore its energy consumption, commensurate with the needs of the computing devices of the computer network, such as client devices, servers, user equipment (UE) devices etc. For example, using the techniques described herein, a power management controller may adjust the operational parameters of network devices to more closely match the performance requirements of computing devices generating network traffic, and therefore may enable such network devices to operate more efficiently at a lower power level and consume less energy than network devices which may only ever operate at maximum capacity and power levels. Accordingly, network devices of a computer network, such as a data center, campus network, or enterprise network, that implements a power management controller as described herein may be significantly more energy-efficient than the network devices that are managed conventionally.

In one example, this disclosure describes a computing system comprising: storage media; and processing circuitry in communication with the storage media, the processing circuitry configured to: obtain time series data comprising information about computing devices of a computer network, wherein the computing devices access other devices of the computer network via network devices that exchange network traffic of the computing devices; apply a machine learning system, trained with historical time series data, to the obtained time series data to predict a requirement of one or more of the network devices for exchanging network traffic of the computing devices for a next time interval; and adjust, based at least in part on the predicted requirement for the next time interval, operation of the one or more of the network devices.

In another example, this disclosure describes a method comprising: obtaining, by processing circuitry of a computing system, time series data comprising information about computing devices of a computer network, wherein the computing devices access other devices of the computer network via network devices that exchange network traffic of the computing devices; applying, by the processing circuitry, a machine learning system, trained with historical time series data, to the obtained time series data to predict a requirement of one or more of the network devices for exchanging network traffic of the computing devices for a next time interval; and adjusting, by the processing circuitry and based at least in part on the predicted requirement for the next time interval, operation of the one or more of the network devices.

In another example, this disclosure describes computer-readable media comprising instructions that, when executed, cause processing circuitry to: obtain time series data comprising information about computing devices of a computer network, wherein the computing devices access other devices of the computer network via network devices that exchange network traffic of the computing devices; apply a machine learning system, trained with historical time series data, to the obtained time series data to predict a requirement of one or more of the network devices for exchanging network traffic of the computing devices for a next time interval; and adjust, based at least in part on the predicted requirement for the next time interval, operation of the one or more of the network devices.

In another example, this disclosure describes a method comprising: applying a machine learning model to a time series database of device information for a plurality of client devices of a network system to predict a network usage requirement of the plurality of client devices for a next time interval; and adjusting, based at least in part on the predicted network usage requirement of the plurality of client devices for the next time interval, a network capability of a network device of a plurality of network devices of the network system.

In another example, this disclosure describes a method comprising: applying a machine learning model, trained with server computing data associated with a plurality of servers of a network system and network traffic data associated with a plurality of network devices of the network system, to an adjustment to a configuration of a server of the plurality of servers to determine a network usage requirement of the plurality of network devices resulting from the adjustment to the configuration of the server.

In another example, this disclosure describes a method comprising: applying a machine learning model, trained with first network traffic data for first application workloads executed by a plurality of servers of a network system, to second network traffic data for a second application workload executed by the plurality of servers to predict a network usage requirement for the second application workload; and adjusting, based on the network usage requirement for the second application workload, a performance capacity of a network device of a plurality of network devices of the network system.

In another example, this disclosure describes a method comprising: applying a machine learning model, trained with first connectivity data and first device profile data of a plurality of client devices of a network system, to second connectivity data and second device profile data of the plurality of client devices to predict a network usage requirement for each network device of a plurality of network devices of the network system; and adjusting, based on the predicted network usage requirement, a mode of a first network device of the plurality of network devices of the network system.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1 is a block diagram illustrating an example system in which examples of the techniques described herein may be implemented in a data center.
FIG. 2 is a block diagram illustrating an example computing system, in accordance with the techniques described in this disclosure.
FIG. 3 is a flowchart illustrating an example operation in accordance with the techniques of the disclosure.
FIG. 4 is a block diagram illustrating an example computer network that includes a network device at full capacity when servers are throttled.
FIG. 5A is a block diagram illustrating an example computer network that includes a network device power throttled, based on a power throttle level of a server, in accordance with the techniques of the disclosure.
FIG. 5B is a block diagram illustrating another example computer network that includes a network device power throttled, based on a power throttle level of a server, in accordance with the techniques of the disclosure.
FIG. 6A is a flowchart illustrating an example operation in accordance with the techniques of the disclosure.
FIG. 6B is a flowchart illustrating an example operation in accordance with the techniques of the disclosure.
FIG. 7 is a block diagram illustrating an example computer network with varying traffic behavior of services.
FIG. 8 is a block diagram illustrating an example computer network that includes network switches at full capacity wasting power.
FIG. 9 is a block diagram illustrating an example computer network that implements network throttling considering application traffic behavior, in accordance with the techniques of the disclosure.
FIG. 10A is a flowchart illustrating an example operation in accordance with the techniques of the disclosure.
FIG. 10B is a flowchart illustrating an example operation in accordance with the techniques of the disclosure.
FIG. 11 is a block diagram illustrating an example computer network including a campus network with wireless access points.
FIG. 12 is a block diagram illustrating an example computer network including a power management controller that adjusts an operating mode of wireless access points based on predicted connectivity patterns, in accordance with the techniques of the disclosure.
FIG. 13A is a flowchart illustrating an example operation in accordance with the techniques of the disclosure.
FIG. 13B is a flowchart illustrating an example operation in accordance with the techniques of the disclosure.

Like reference characters refer to like elements throughout the figures and description.

### DETAILED DESCRIPTION

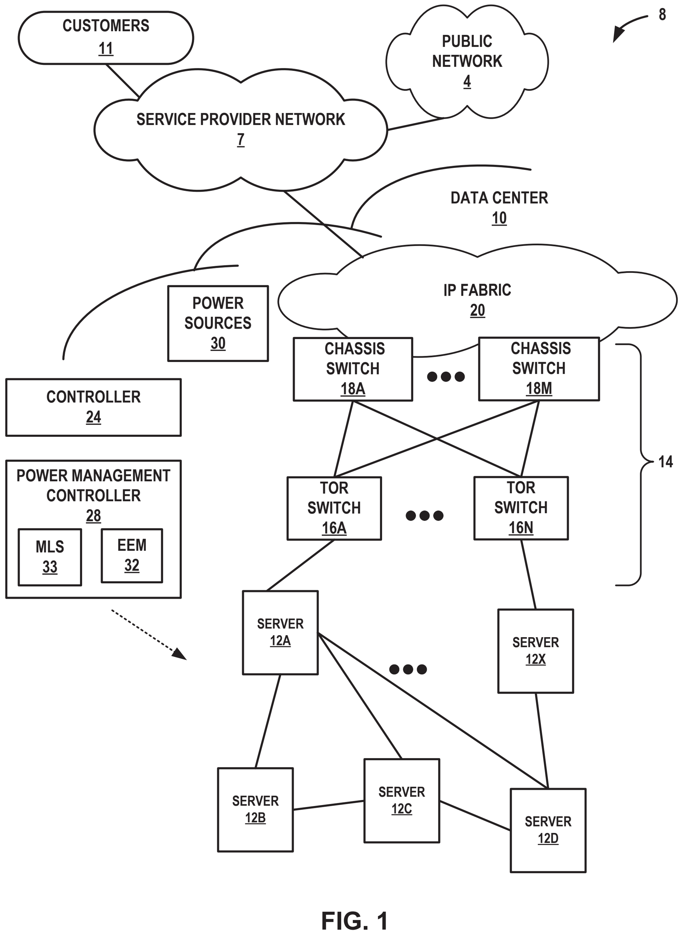

FIG. 1 is a block diagram illustrating an example system 8 in which examples of the techniques described herein may be implemented in a data center 10. Although FIG. 1 is described in terms of an edge deployment of router 110 in an enterprise network, techniques described herein may apply in other contexts, such as in a service provider network or in a data center environment. In general, data center 10 provides an operating environment for applications and services for one or more customer sites 11 (illustrated as "customers 11") having one or more customer networks coupled to the data center by service provider network 7. Data center 10 may, for example, host infrastructure equipment, such as networking and storage systems, redundant power supplies (e.g., power source(s) 30), and environmental controls. Service provider network 7 is coupled to public network 4, which may represent one or more networks administered by other providers, and may thus form part of a large-scale public network infrastructure, e.g., the Internet. Public network 4 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 4 are illustrated and described primarily as edge networks of service provider network 7, in some examples, one or more of customer sites 11 and public network 4 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 4. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In the example illustrated in FIG. 1, data center 10 includes storage and/or compute servers interconnected via switch fabric 14 provided by one or more tiers of physical network switches and routers, with servers 12A-12X (herein, "servers 12") depicted as coupled to top-of-rack (TOR) switches 16A¬-16N. Servers 12 may also be referred to herein as "hosts" or "host devices." Data center 10 may include many additional servers coupled to other TOR switches 16 of the data center 10.

Switch fabric 14 in the illustrated example includes interconnected top-of-rack (or other "leaf") switches 16A-16N (collectively, "TOR switches 16") coupled to a distribution layer of chassis (or "spine" or "core") routers or switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Techniques described herein may apply to any of these systems or devices.

In the example illustrated in FIG. 1, TOR switches 16 and chassis switches 18 provide servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance.

Each of servers 12 may be a compute node, an application server, a storage server, or other type of server. For example, each of servers 12 may represent a computing device, such as an x86 processor-based server, configured to operate according to techniques described herein. Servers 12 may provide Network Function Virtualization Infrastructure (NFVI) for an NFV architecture.

Servers 12 host endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

Power management controller 28 may manage aspects of how various network devices within fabric 14 consume power. Power management controller 28 may communicate information describing power usage, power capacity, expected capacity, and/or other aspects of energy consumption to an orchestration system (not shown) or network controller 24. Example orchestration systems include OpenStack, vCenter by VMWARE, or System Center by MICROSOFT. Example network controllers 24 include a controller for Apstra, Paragon, Mist, or Contrail by JUNIPER NETWORKS or Tungsten Fabric.

In accordance with one or more aspects of the techniques described in this disclosure, power management controller 28 may invoke one or more actions to improve energy efficiency of data center 10. In some examples, power management controller 28 determines information about energy needs of one or more devices (e.g., switches 16 and 18) within fabric 14 (or devices within data center 10 generally) and adjusts the operation of such devices to improve energy efficiency of data center 10. In some examples, power management controller 28 may include an energy efficiency module 32 configured to determine the energy efficiency of devices within the data center (or the data center generally), manage an energy consumption of devices within the data center, and/or manage or control certain aspects of how devices operate within the data center that affect energy consumption.

As previously described, it may be possible to manage power in a computing system to ameliorate inefficiencies stemming from network devices overbuilt for current needs to, through software or other methods, "offline" individual CPU cores within devices within data center 10 and/or reduce the frequency at which the cores are clocked. Normally, lower clock speeds translate into reduced energy consumption by the devices within data center 10. Further, it is possible, also through software, to offline individual memory modules (e.g., using a power conservation mode) which will also normally translate into reduced energy consumption by the devices within data center 10.

As previously described, a number of different processes or methods may be employed to reduced energy consumption. In the first user-driven method, the user sets the expected number of the available cores that will be used by the network device, such as in terms of a percentage of the maximum scale. In this sense, the user adjusts a configuration knob or dial (e.g., by manually configuring a network device or one of switches 16 or 18) that is used for adjusting the expected number of cores to be used. Similarly, the user determines and sets the expected number of memory modules that may be used.

In the second method, power management controller 28 (e.g., energy efficiency module 32) determines and/or detects the scale of the CPUs and/or memory modules needed for current and/or expected operations for a given router or network device (e.g., including, but not necessarily limited to one or more of switches 16 or 18) in data center 10. Power management controller 28 then interacts with the network device to offline a subset of the cores, reduce the frequency of the cores, and/or offline a subset of the memory modules, as per the determined or detected scale by the power management controller 28. In some examples, this process is performed by the router or network device itself, rather than by power management controller 28 (e.g., module 32 may be included within a network device (e.g., within routers or switches 16 and 18) rather than within power management controller 28).

In the third method, a machine learning algorithm is trained to predict the appropriate scale for the number of cores to offline, the frequency at which to clock the cores, and/or the number of memory modules to offline. In some examples, the model is trained based on historical data about the network device's scale, switching or other operations, CPU, core, memory utilization, and/or the device's configuration. The trained model is then applied by power management controller 28 (or by a network device) to determine the appropriate scale for the number of cores to offline, the frequency at which to clock the cores, and/or the number of memory modules to offline. Once such a determination is made, the relevant network device is adjusted (e.g., through offlining techniques or frequency reduction) based on the determination.

With each method, the power management controller 28, the network device, or an administrator or user may be able to select the method(s) of power management and/or optimization, which may involve offlining cores, reducing clock frequency, and/or offlining memory modules. The power management controller 28, the network device, or the user may enable/disable these power management features globally (or per-chassis) or on a per-device component basis (e.g., on a field replaceable unit-basis).

As with the example described herein, the proposed techniques may be both revertive and dynamic. For example, the CPU cores or frequency may increase with any upward system scale change. Similarly, the memory modules used may also increase with the upward change of system scale. In general, the CPU cores (or frequency) and memory module usages will go up or down dynamically with the system's scale.

In one example, a user may have multiple routers or switches deployed in a production network, such as that illustrated in FIG. 1. Power management controller 28 determines that the current route and protocol scale of the deployment is, for example, 40% of a given router's maximum supported scale. Applying the user-driven method described above, the user sets the scale at 50% (or any other appropriate percentage, depending on the example) of the routers, having allocated 10% headroom. Accordingly, based on these settings, power management controller 28 may determine that the frequency of the cores should be reduced by 50%. Alternatively, or in addition, power management controller 28 may determine that 50% of the cores should be offlined. Alternatively, or in addition, power management controller 28 may determine that 50% of the memory modules should be offlined. And in examples where the deployment needs may increase over time, power management controller 28 may proportionally activate or online new cores, proportionally increase clock frequency, and/or proportionally activate/online memory modules.

Modules illustrated in FIG. 1 (e.g., energy efficiency module 32) and/or illustrated or described elsewhere in this disclosure may perform operations described using software, hardware, firmware, or a mixture of hardware, software, and firmware residing in and/or executing at one or more computing devices. For example, a computing device may execute one or more of such modules with multiple processors or multiple devices. A computing device may execute one or more of such modules as a virtual machine executing on underlying hardware. One or more of such modules may execute as one or more services of an operating system or computing platform. One or more of such modules may execute as one or more executable programs at an application layer of a computing platform. In other examples, functionality provided by a module could be implemented by a dedicated hardware device.

Although certain modules, data stores, components, programs, executables, data items, functional units, and/or other items included within one or more storage devices may be illustrated separately, one or more of such items could be combined and operate as a single module, component, program, executable, data item, or functional unit. For example, one or more modules or data stores may be combined or partially combined so that they operate or provide functionality as a single module. Further, one or more modules may interact with and/or operate in conjunction with one another so that, for example, one module acts as a service or an extension of another module. Also, each module, data store, component, program, executable, data item, functional unit, or other item illustrated within a storage device may include multiple components, sub-components, modules, sub-modules, data stores, and/or other components or modules or data stores not illustrated.

Further, each module, data store, component, program, executable, data item, functional unit, or other item illustrated within a storage device may be implemented in various ways. For example, each module, data store, component, program, executable, data item, functional unit, or other item illustrated within a storage device may be implemented as a downloadable or pre-installed application. In other examples, each module, data store, component, program, executable, data item, functional unit, or other item illustrated within a storage device may be implemented as part of an operating system executed on a computing device.

In accordance with the techniques of the disclosure, power management controller 28 provides improved energy efficiency of network devices 16, 18 of network system 8. Power management controller 28 includes energy efficiency module 32 and machine learning system 33. In some examples, all or a portion of energy efficiency module 32, machine learning system 33, and power management controller 28 may be distributed across one or more computing devices or may be accessible as a service or application provided via a cloud service provider. In some examples, (not depicted in FIG. 1), machine learning system 33 may be provided by a third party server that is not part of data center 10.

In one example of the techniques of the disclosure, energy efficiency module 32 of power management controller 28 obtains time series data comprising information about computing devices of system 8. In some examples, the computing devices may include, e.g., servers 12. In some examples, the computing devices comprise one or more client devices, such as mobile devices, laptops or smart phones, Internet-of-Things (IoT) devices, or other types of subscriber devices (not depicted in FIG. 1). In some examples, the information about servers 12 is categorized according to each application or service executed by each server 12, according to the particular server 12 generating the information, or according to particular device characteristics, such as CPU or GPU make/model, wireless channel operating band, etc.

Machine learning system 33 may be trained with historical time series data for computing devices, such as servers 12, and network devices 16, 18 to predict, for a next time interval, a requirement to satisfy network traffic generated by servers 12 over the next time interval. In some examples, the requirement is a network performance requirement of each of the computing devices. In some examples, machine learning system 33 performs initial training upon historical time series data for a first set of computing devices and network devices (e.g., a first set of devices that is separate from the devices of data center 10 of FIG. 1). In this example, after the initial training, machine learning system 33 may optionally perform fine-tuning using historical time series data of a second set of computing devices and network devices (e.g., a second set of devices that includes computing devices, such as servers 12, and network devices 16, 18 of data center 10 of FIG. 1). In another example, machine learning system 33 performs training solely on historical time series data obtained for the same computing devices and network devices of the computer network upon which machine learning system 33 is to perform inference analysis (e.g., only on servers 12, and network devices 16, 18 of data center 10 of FIG. 1).

Energy efficiency module 32 of power management controller 28 applies trained machine learning system 33 to the obtained time series data for servers 12 to predict a requirement for exchanging network traffic of servers 12 for a next time interval. Based at least in part on the predicted requirement of servers 12 for the next time interval, energy efficiency module 32 adjusts a network capability of at least one of network devices 16, 18.

Using the techniques disclosed herein, power management controller 28 may adjust the operating capabilities of network devices 16, 18 so as to account for the actual networking needs of servers 12. Power management controller 28, operating as described herein, may therefore reduce energy consumption network devices 16, 18 when network demand is low, so as to improve the energy efficiency of network devices 16, 18.

The example of FIG. 1 depicts a data center. However, the techniques of the disclosure may be applied to a number of different types of networks or implementations, as described below. For example, the techniques of the disclosure may be implemented in a data center (as depicted in FIG. 1), an enterprise or campus network, a subscriber network, or an access or transit network.

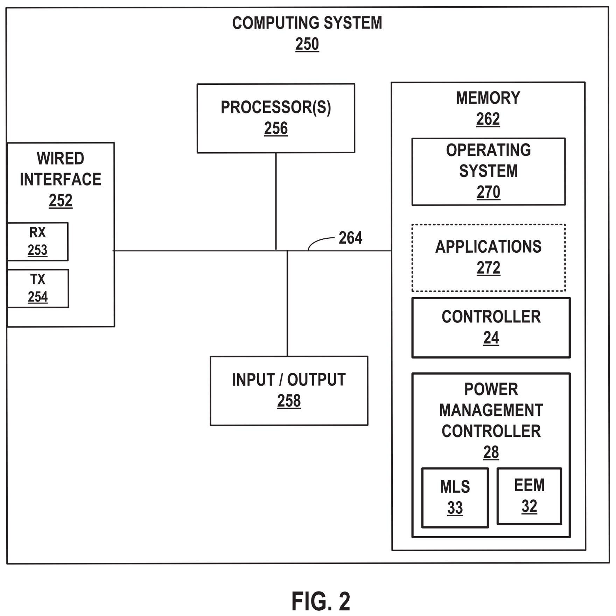

FIG. 2 is a block diagram illustrating an example computing system 250, in accordance with the techniques described in this disclosure. Computing system 250 of FIG. 2 may be configured to execute controller 24 or power management controller 28 of FIG. 1.

In this example, computing system 250 includes a communications interface 252, e.g., an Ethernet interface, a processor 256, input / output 258, e.g., display, buttons, keyboard, keypad, touch screen, mouse, etc., a memory 262 coupled together via a bus 264 over which the various elements may interchange data and information. Communications interface 252 couples the computing system 250 to a network, such as an enterprise network. Though only one interface is shown by way of example, those skilled in the art should recognize that network nodes may, and usually do, have multiple communication interfaces. Communications interface 252 includes a receiver (RX) 253 via which the computing system 250, e.g., a server, can receive data and information. Communications interface 252 includes a transmitter (TX) 254, via which the computing system 250 can send data and information.

Processor(s) 256 execute software instructions, such as those used to define a software or computer program. Such software instructions may be stored to a computer-readable storage medium (such as memory 262), such as non-transitory computer-readable media including a storage device (e.g., a disk drive, or an optical drive) or a memory (such as Flash memory or RAM) or any other type of volatile or non-volatile memory, that stores instructions to cause the one or more processors 256 to perform the techniques described herein. Examples of processor(s) 256 may include, any one or more of a microprocessor, a controller, a digital signal processor (DSP), an application specific integrated circuit (ASIC), a field-programmable gate array (FPGA), or equivalent discrete or integrated logic circuitry. Such instructions may also or alternatively be conveyed to the processor(s) 256 by way of a computer-readable transmission medium, such as wired interface 252 and/or bus 264.

Memory 262 includes one or more devices configured to store programming modules and/or data associated with operation of computing system 250. For example, memory 262 may include a computer-readable storage medium, such as non-transitory computer-readable media including a storage device (e.g., a disk drive, or an optical drive) or a memory (such as Flash memory or RAM) or any other type of volatile or non-volatile memory, that stores instructions to cause the one or more processor(s) 256 to perform the techniques described herein. Memory 262 stores executable operating system 270 and may, in various configurations, store instructions for software applications 272, controller 24, and/or power management controller 28.

Input / Output 258 may include one or more input devices and one or more output devices of computing system 250. The input device(s) of Input / Output 258 may generate, receive, and/or process input. For example, the input device(s) of Input / Output 258 may generate or receive input from a network, a user input device, or any other type of device for detecting input from a human or machine. The output device(s) of Input / Output 258, in some examples, are configured to provide output to a user using tactile, audio, or video stimuli. The output device(s) of Input / Output 258, in one example, includes a presence-sensitive display, a sound card, a video graphics adapter card, or any other type of device for converting a signal into an appropriate form understandable to humans or machines. Additional examples of output device(s) of Input / Output 258 include a speaker, a cathode ray tube (CRT) monitor, a liquid crystal display (LCD), or any other type of device that can generate intelligible output to a user.

Computing system 250 further includes power management controller 28. Power management controller 28 includes energy efficiency module 32 and machine learning system 33, which operate in a similar fashion as described above with respect to FIG. 1. Computing system 250 implements controller 24 and power management controller 28 as software or a combination of software and hardware.

In accordance with the techniques of the disclosure, power management controller 28 reduces an amount of power needed to operate network devices 16, 18, and thereby provides improved energy efficiency of network devices 16, 18 of network system 8. Power management controller 28 includes energy efficiency module 32 and machine learning system 33. In some examples, all or a portion of energy efficiency module 32, machine learning system 33, and power management controller 28 may be distributed across one or more computing devices or may be accessible as a service or application provided via a cloud service provider.

In one example of the techniques of the disclosure, energy efficiency module 32 of power management controller 28 obtains time series data comprising information about computing devices of system 8. In some examples, the computing devices may include, e.g., servers 12 hosting application workloads. In some examples, the computing devices comprise one or more client devices, such as mobile devices, laptops or smart phones, Internet-of-Things (IoT) devices, or other types of subscriber devices (not depicted in FIG. 1).

In some examples, the information about servers 12 includes, for each time interval of a plurality of time intervals, one or more of a central processing unit (CPU) utilization, a memory utilization, a network bandwidth consumption, a device make and model, a device configuration, or a physical characteristic. In some examples, the information about servers 12 is categorized or organized according to each application or service executed by each server 12, according to the particular server 12 generating the information, or according to particular device characteristics, such as CPU or GPU make/model, wireless channel operating band, etc. For example, the information may be aggregated or organized into multiple categories, so that, e.g., energy efficiency module 32 may obtain time series data for a particular application that includes CPU utilization, memory utilization, and network bandwidth consumption, for example, of each server 12 executing an instance of the application.

In some examples, machine learning system 33 comprises a recurrent neural network (RNN), such as a Long Short-Term Memory (LSTM) model. In some examples, machine learning system 33 may be an AI model, such as a Large Language Model (LLM), Small Language Model (SLM), or other type of Generative AI model or deep learning model. In some examples, (not depicted in FIG. 1), machine learning system 33 may be provided by a third party server that is not part of data center 10. Machine learning system 33 may be trained with historical time series data for similar kinds of devices to predict, for a next time interval, a requirement to satisfy network traffic generated by servers 12 over the next time interval. Energy efficiency module 32 of power management controller 28 applies trained machine learning system 33 to the obtained time series data for servers 12 to predict a requirement for exchanging network traffic of servers 12 for a next time interval.

Based at least in part on the predicted requirement of servers 12 for the next time interval, energy efficiency module 32 causes power management controller 28 to output a command that adjusts a network capability of at least one of network devices 16, 18. For example, energy efficiency module 32 may adjust a bandwidth provided by the network device 16, 18, such as by adjusting an operation or operational state of one or more packet processing units (PPUs) or an interface of the network device 16, 18, such as configuring a maximum bandwidth or maximum throughput, deactivating or activating the PPU, powering off the PPU, adjusting a power budget for the PPU, etc. In some examples, energy efficiency module 32 may adjust one or more operational parameters that affect energy consumption of the network device 16, 18, adjust clock frequency of a CPU of the network device 16, 18, adjust an operating voltage of the network device 16, 18, adjust a power budget ("power-gate") configured for a packet processing unit (e.g., a forwarding Application-specific Integrated Circuit (ASIC) of the network device 16, 18, or adjust a power requirement, power budget, or power level of an antennae or radio of the network device 16, 18.

In some examples, energy efficiency module 32 may change or disable a frequency of an operating channel of the network device. For example, energy efficiency module 32 enables a first operating channel of the network device 16, 18, the first operating channel operating at a first frequency comprising about a 2.5 GHz band and disables a second operating channel of the network device, the second operating channel operating at a second frequency comprising about a 5 GHz band. As another example, energy efficiency module 32 enables both the first operating channel and the second operating channel.

Using the techniques disclosed herein, power management controller 28 may adjust operational settings of network devices 16, 18 so as to account for the actual networking needs of servers 12. Power management controller 28, operating as described herein, may therefore reduce energy consumption network devices 16, 18 when network demand is likely to be low, to improve the energy efficiency of network devices 16, 18.

As an example, machine learning system 33 predicts, based on the received information, an increase in the requirement of server 12A for the next time interval as compared to a past requirement for a previous time interval. In some examples, the requirement is a network performance requirement of server 12A. Accordingly, energy efficiency module 32 adjusts a network capability of TOR switch 16A by adjusting one or more operational parameters of TOR switch 16A to increase a network bandwidth throughput of TOR switch 16A.

As another example, machine learning system 33 predicts, based on the received information, a decrease in the requirement of server 12X for the next time interval as compared to a past requirement for a previous time interval. Accordingly, energy efficiency module 32 adjusts a network capability of TOR switch 16N by adjusting one or more operational parameters of TOR switch 16A to decrease a network bandwidth throughput of TOR switch 16N.

In addition, machine learning system 33 may granularly predict requirements of individual computing devices, such as servers 12, such that energy efficiency module 32 may individually adjust a network capability of each network device 16, 18. As an illustrative example, machine learning system 33 predicts an increase in a first requirement for exchanging network traffic of server 12A for the next time interval as compared to a past requirement for exchanging network traffic of server 12A for a previous time interval. In addition, machine learning system 33 predicts a decrease in a second requirement for exchanging network traffic of server 12X for the next time interval as compared to a past requirement for exchanging network traffic of server 12X previous time interval. Energy efficiency module 32 accordingly increases an energy consumption of, e.g., TOR switch 16A and chassis switch 18, which are configured to exchange the network traffic of server 12A, while decreasing an energy consumption of TOR switch 16N and chassis switch 18M, which are configured to exchange the network traffic of server 12X.

As another example of the techniques of the disclosure, computing devices of system 8 of FIG. 1 comprise servers 12 hosting application workloads. Energy efficiency module 32 receives information about servers 12 indicating a power throttling state of each server 12. Machine learning system 33 is trained with information including historical power throttling states of servers 12 and historical network bandwidth usage of network devices 16, 18 corresponding in time to the power throttling states of servers 12. Energy efficiency module 32 applies trained machine learning system 33 to the received information indicating the power throttling state of each server 12 to predict a requirement for exchanging network traffic of servers 12 for a next time interval, and adjusts a network capability of at least one of network devices 16, 18 based on the predicted requirement.

As another example of the techniques of the disclosure, computing devices of system 8 of FIG. 1 comprise servers 12 hosting application workloads. Energy efficiency module 32 receives information about servers 12 indicating a CPU usage, a memory usage, or a GPU usage of each of servers 12. Machine learning system 33 is trained with information including historical CPU usage, memory usage, or GPU usage of servers 12 and historical network bandwidth usage of network devices 16, 18 corresponding in time to the CPU usage, memory usage, or GPU usage of each of servers 12. Energy efficiency module 32 applies trained machine learning system 33 to the received information indicating the CPU usage, memory usage, or GPU usage of each of servers 12 to predict a requirement for exchanging network traffic of servers 12 for a next time interval, and adjusts a network capability of at least one of network devices 16, 18 based on the predicted requirement.

As an example of the techniques of the disclosure, computing devices of system 8 of FIG. 1 comprise servers 12 hosting application workloads. Energy efficiency module 32 receives information about servers 12 indicating a resource utilization of each server 12. Machine learning system 33 is trained with information including historical resource utilization of servers 12 and historical network bandwidth usage of network devices 16, 18 corresponding in time to the resource utilization of servers 12. Energy efficiency module 32 applies trained machine learning system 33 to the received information indicating the resource utilization of each server 12 to predict a requirement for exchanging network traffic of servers 12 for a next time interval, and adjusts a network capability of at least one of network devices 16, 18 based on the predicted requirement.

As an example of the techniques of the disclosure, computing devices of system 8 of FIG. 1 comprise servers 12 hosting application workloads. Energy efficiency module 32 receives information about servers 12 indicating a network traffic intensity of each of the application workloads hosted by servers 12. Machine learning system 33 is trained with information including historical network traffic intensities of applications hosted by servers 12 and historical indicating network bandwidth usage of network devices 16, 18 corresponding in time to the network traffic intensities of applications hosted by servers 12. Energy efficiency module 32 applies trained machine learning system 33 to the received information indicating the network traffic intensity of each of the application workloads hosted by servers 12 to predict a requirement for exchanging network traffic of servers 12 for a next time interval, and adjusts a network capability of at least one of network devices 16, 18 based on the predicted requirement.

As an example of the techniques of the disclosure, computing devices of system 8 of FIG. 1 comprise one or more user equipment (UE) devices (not depicted in FIG. 1), and wherein the network devices 16, 18 comprise wireless Access Points (APs). Energy efficiency module 32 receives information about servers 12 indicating an operating channel frequency of each of the UE devices. Machine learning system 33 is trained with information including historical operating channel frequencies of the UE devices and historical network usage patterns of the wireless APs corresponding to the operating channel frequencies of the UE devices. In some examples, the information includes a schedule indicating at network bandwidth consumption of each wireless AP for each operating channel frequency supported by the wireless AP on a time-series basis. Energy efficiency module 32 applies trained machine learning system 33 to the received information indicating operating channel frequencies of each of the UE devices to predict a requirement for exchanging network traffic of the UE devices for a next time interval for each operating channel frequency, and adjusts a network capability of at least one of the wireless APs based on the predicted requirement.

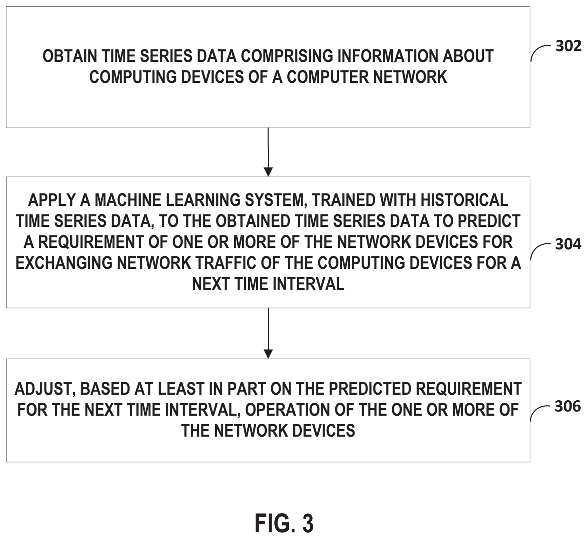

FIG. 3 is a flowchart illustrating an example operation in accordance with the techniques of the disclosure. FIG. 3 is described with respect to FIG. 1 for convenience.

For example, energy efficiency module 32 of power management controller 28 obtains time series data comprising information about computing devices of system 8 (302). In some examples, the computing devices may include, e.g., servers 12. In some examples, the computing devices comprise one or more client devices, such as mobile devices, laptops or smart phones, Internet-of-Things (IoT) devices, user equipment (UE) devices, or other types of subscriber devices (not depicted in FIG. 1). In some examples, the information about servers 12 is categorized according to each application or service executed by each server 12, according to the particular server 12 generating the information, or according to particular device characteristics, such as CPU or GPU make/model, wireless channel operating band, etc.

Machine learning system 33 may be trained with historical time series data for computing devices and network devices to predict, for a next time interval, a requirement to satisfy network traffic generated by servers 12 over the next time interval. Energy efficiency module 32 of power management controller 28 applies trained machine learning system 33 to the obtained time series data for servers 12 to predict a requirement of one or more of the network devices 16, 18 for exchanging network traffic of the servers 12 for a next time interval (304). Based at least in part on the predicted requirement for the next time interval, energy efficiency module 32 adjusts operation of the one or more of the network devices 16, 18 (306).

### Smart Network Throttling in Compute Throttled Data Centers

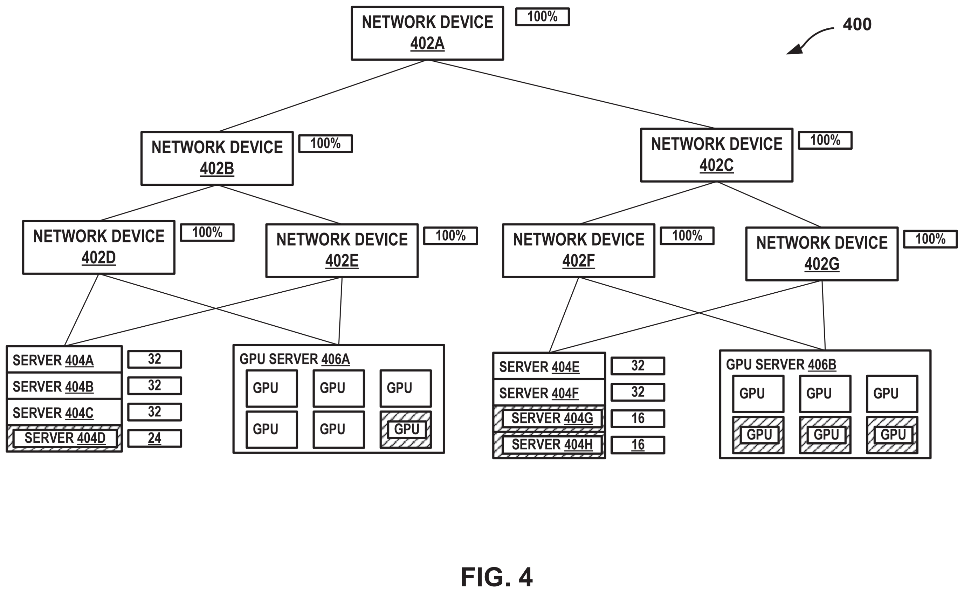

FIG. 4 is a block diagram illustrating an example computer network 400 that includes network devices 402A-402G (collectively, "network devices 402") at full capacity when servers 404A-404H (collectively, "servers 404") and GPU servers 406A-406B (collectively, "GPU servers 406") are throttled. The example computer network 400 of FIG. 4 does not operate in accordance with the techniques of the disclosure.

Data center servers 404, 406 operate at variable loads, as application demands fluctuate over time. During periods of low utilization, server resources are automatically throttled down to reduce energy consumption. For example, as depicted in the example of FIG. 4, servers 404A-404C are using each of 32 cores (depicted as "32" in FIG. 4), while server 404D is throttled (depicted with hashing) to use only 24 cores (depicted as "24" in FIG. 4). In addition, servers 404E-404F are using each of 32 cores (depicted as "32" in FIG. 4), while servers 404G-404H are throttled (depicted with hashing) to use only 16 cores (depicted as "16" in FIG. 4). GPU Server 406A is throttled to use only 5 of 6 cores, while the 6th core is deactivated (depicted with hashing). Similarly, GPU Server 406B is throttled to use only 3 of 6 cores, while three cores are deactivated (depicted with hashing).

Network devices 402A-402G are depicted as having three tiers of power usage, operating at 100%, 70%, or 30% of maximum power usage. In the absence of the techniques of this disclosure, network devices 402 supporting these servers 404, 406 are typically configured for peak traffic capacity and continue operating at full power regardless of actual traffic load (depicted as box "100%) in FIG. 4. This mismatch between network device operation and server workload can result in unnecessary energy consumption and inefficiency. As shown in FIG. 4, servers 404, 406 including GPU servers 406 are throttled by reducing the number of active CPU cores when the compute load is low. But as shown in FIG. 4, network devices 402 are still running at full capacity.

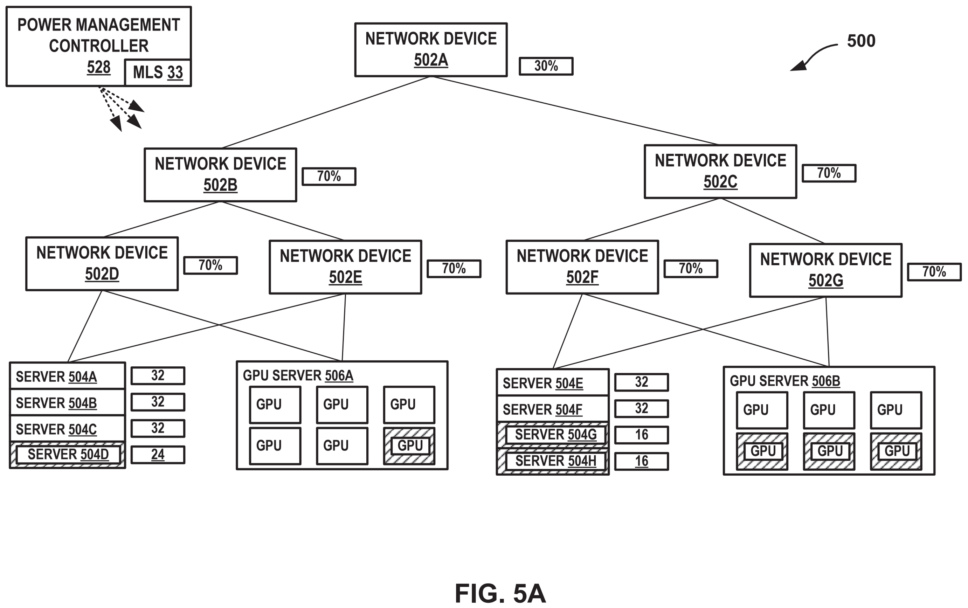

FIG. 5A is a block diagram illustrating an example computer network 500 that includes a power management controller 528 configured to manage operation of network devices and servers, in accordance with the techniques of this disclosure. As shown in FIG. 5A network devices 502A-502G (collectively, "network devices 502") are operating in a throttled state, based on a throttled state of servers 504A-504H (collectively, "servers 504") and GPU servers 506A-506B (collectively, "GPU servers 506"), in accordance with the techniques of the disclosure. In some examples, network devices 502 are examples of switches 16, 18 and servers 504, 506 are examples of servers 12 of FIG. 1. Power management controller 528 may be an example of power management controller 28 of FIG. 1.

With respect to the specific example of FIG. 5A, servers 504A-504C are using each of 32 cores (depicted as "32" in FIG. 5A), while server 504D is throttled (depicted with hashing) to use only 24 cores (depicted as "24" in FIG. 5A). In addition, servers 504E-504F are using each of 32 cores (depicted as "32" in FIG. 5A), while servers 504G-504H are throttled (depicted with hashing) to use only 16 cores (depicted as "16" in FIG. 5A). GPU Server 506A is throttled to use only 5 of 6 cores, while the 6th core is deactivated (depicted with hashing). Similarly, GPU Server 506B is throttled to use only 3 of 6 cores, while three cores are deactivated (depicted with hashing). In addition, network device 502A is throttled to operate at 30% of maximum power (depicted as box "30%" in FIG. 5A), while network devices 502B-502G are throttled to operate at 70% of maximum power (depicted as box "70%" in FIG. 5A).

Power management controller 528 continuously or periodically monitors and collects information about both network traffic data and server computing metrics. Using machine learning algorithms and models, power management controller 528 analyzes the relationship between server throttling levels and corresponding network switch traffic loads. This enables power management controller 528 to correlate server computing adjustments (e.g., adjustments to a configuration of a server 504, 506) to network usage patterns.

Power management controller 528 employs machine learning algorithms to analyze how changes in server computing resources correlate with network traffic levels. Using this correlation information, power management controller 528 calculates the actual bandwidth requirements and accordingly adjusts operation of network switch 502 to reduce its power requirement. As illustrated in FIG. 5A, power management controller 528 achieves this adjustment by throttling the packet processing capabilities of network devices 502 to better align with the reduced traffic demand. In some examples, the controller 528 may reduce the power requirement of a network device 502 by turning off one or more packet processing units of network device 502, modifying a power budget of one or more packet processing units of network device 502, adjusting operation of network device 502 by modifying a number of power of one or more radios, a CPU speed, a number of cores used by a CPU, a memory speed, a prioritization of one or more routing processes executed by a CPU, or an amount of processing resources allocated to one or more routing processes, for example.

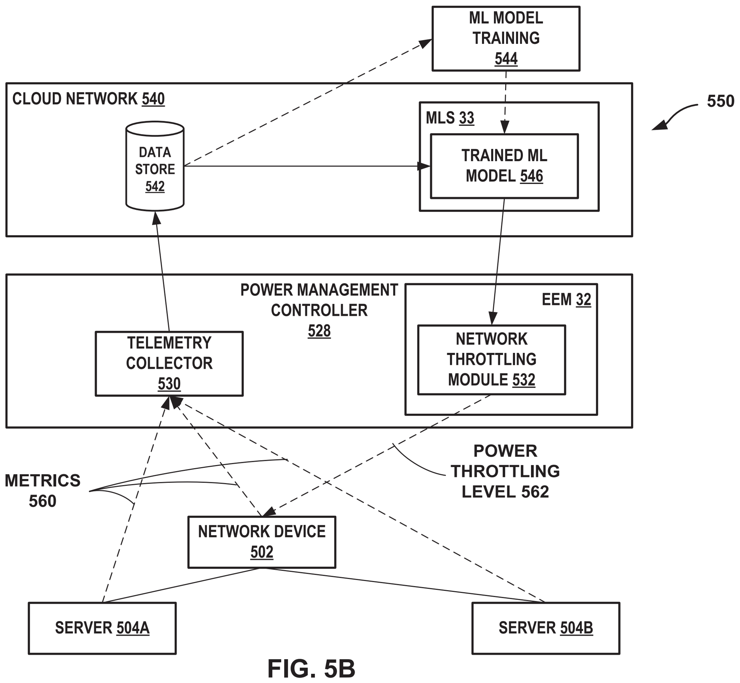

FIG. 5B is a block diagram illustrating another example computer network 550 that includes a power management controller 528 configured to manage operation of network devices and servers, in accordance with the techniques of this disclosure. As shown in FIG. 5B, power management controller 528 configures network device 502 to operate in a power-throttled state, based on a power throttle level of servers 504, in accordance with the techniques of the disclosure. In some examples, computer network 550 is an example implementation of computer network 500 of FIG. 5A.

CPU and compute throttling in servers, also known as dynamic frequency scaling, is a mechanism where the processor of a server 504 reduces its clock speed to manage energy consumption and prevent overheating. CPU and compute throttling may be caused by overheating of servers 504 or excessive energy consumption of servers 504. Network throttling refers to making network device 502, such as a network switch or router, to operate at a lower bandwidth. A packet processing unit, such as a packet processing and switching Application-specific Integrated Circuit (ASIC) or packet forwarding engine of network device 502 may be configured to operate at a lower speed and/or power level, or may be turned off entirely.

In accordance with the techniques of the disclosure, techniques are described to enable power management controller 528 to periodically determine a traffic capacity needed from a network device 502, based on a CPU throttling level of servers 504 in the network. Such techniques may make traffic prediction of switches/routers more accurate, which may enable power management controller 528 to reduce the power requirements of network device 502 and use less energy when servers 504 are in a power throttling state. This may preserve the ability of network 550 to handle unexpected spikes in the traffic passing through network device 502, in contrast to an approach that predicts an amount of network traffic solely based on an amount of traffic passing through servers 504, while enabling power management controller 528 to reduce energy consumption of network device 502 to match the actual needs of servers 504.

In the example of FIG. 5B, telemetry collector 530 of controller 528 collects metrics 560 to monitor CPU and compute throttling levels of servers 504, including temperature, energy consumption, and network traffic generated by servers 504. In some examples, metrics 560 include metrics indicative of a server energy consumption, a server temperature, a server network traffic or bandwidth consumption, a CPU Usage, a memory usage, a CPU throttling level, or one or more CPU throttling time windows.

Controller 528 provides monitored metrics 560 of servers 504 to a data store of 542 of cloud network 540. In some examples, ML model training module 544 performs ML model training based on this data from servers 504 to train trained ML model 546 to predict CPU throttling levels of server 504 at given time window. In other examples, trained ML model 546 is initially (or only) trained based on other third-party server data, independent of network 550, and not based on data from servers 504. In some examples, such a trained ML model 546 may be updated over time based on monitored metrics 560. In some examples, trained ML model 546 may be part of power management controller 528.

Controller 528 applies trained ML model 546 to metrics 560 obtained from servers 504 to predict a CPU throttling level and network traffic generated by servers 504 connected to network device 502, which may be a switch, router, or gateway device. Controller 528 determines an expected traffic load on network device 502 based on the predicted CPU throttling level and network traffic of servers 504 connected to network device 502.

In some examples, network throttling module 532 of energy efficiency module 32 attempts to determine an optimal throttling level, either for individual network devices 502, or for a network or sub-network, such that one or more network devices 502 run at a power capacity sufficient to serve the bandwidth requirement of servers 504, without exceeding the power capacity required to serve the bandwidth requirement of servers 504 and therefore wasting energy.

In some examples, an administrator enables a CPU Throttling feature for compute servers 502 and configures temperature, power usage, and/or energy consumption range values to cause servers 502 to enter a CPU throttling mode at a particular level. For example, when an energy consumption of server 502A is 500 Watts and a temperature of server 504A is 45 degrees Celsius, server 504A is configured to throttle its CPU 30%, and when an energy consumption of server 502A is 750 Watts and a temperature of server 504A is 60C, server 504A is configured to throttle its CPU 50%, etc.

When the CPU throttling feature is enabled in controller 528, telemetry collector 530 of controller 528 begins collecting the aforementioned metrics 560 of servers 504 and network devices 502. Controller 528 also initiates fine-tuning / re-training of trained ML model 546 to predict network traffic and bandwidth for network devices 502 using the aforementioned metrics 560 of servers 504 and network devices 502 as parameters.

In some examples, the administrator enables a power throttling feature of network devices 502 in controller 528. Controller 528 enables the pre-trained / re-trained ML model 546 to predict a network traffic for network devices 502. Controller 528 passes metrics 506 to ML model 546 to infer or predict a corresponding network traffic for network devices 502. Controller 528 may iterate over network devices 502 such that, for each device, controller 528 applies trained ML model 546 to predict network traffic for a next time interval and determines a corresponding throttling level to be applied to the network device 502.

Controller 528, using the techniques of the disclosure, may determine a power throttling level for each network device 502 based on a throttling level of servers 504, rather than solely based on traffic patterns of switches/routers. In addition, controller 528, using the techniques of the disclosure, may predict a power throttling level of each network device 502 in advance using trained machine learning model 546.

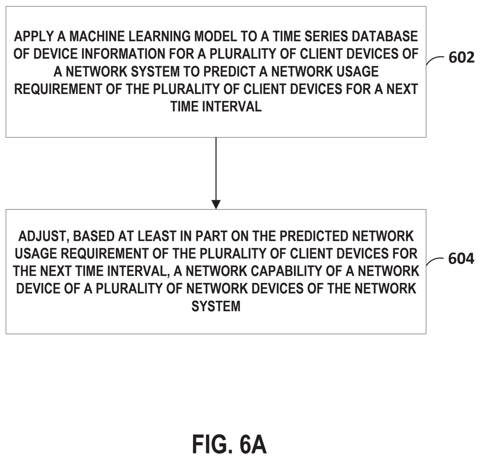

FIG. 6A is a flowchart illustrating an example operation in accordance with the techniques of the disclosure. In particular, FIG. 6A describes an operation of power management controller 528 of FIGS. 5A-5B. Power management controller 528 applies a machine learning model to a time series database of device information for a plurality of client devices (such as servers 504, 506) of a network system 500 to predict a network usage requirement of the plurality of client devices 504, 506 for a next time interval (602). Power management controller 528 adjusts, based at least in part on the predicted network usage requirement of the plurality of client devices 504, 506 for the next time interval, a network capability of a network device 502D of a plurality of network devices 502 of the network system (604).

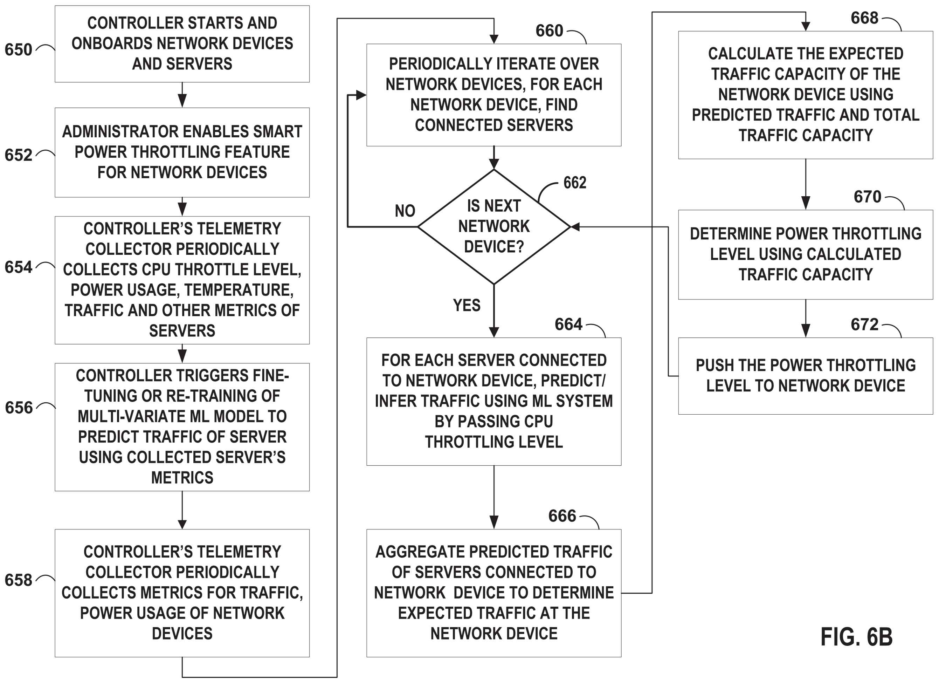

FIG. 6B is a flowchart illustrating an example operation in accordance with the techniques of the disclosure. In particular, FIG. 6B describes an operation of power management controller 528 of FIG. 5A-5B.

Controller 528 starts and onboards network devices 502 and servers 506 (650). An administrator enables Smart Power Throttling feature for network devices 502 (652). A Telemetry Collector of controller 528 periodically collects CPU Throttle Level, Power Usage, Temperature, Traffic and other metrics of servers 506 (654).

Controller 528 triggers fine-tuning or re-training of a multi-variate ML model of MLS 33 to predict network traffic of servers 506 using collected metrics of each server 506 (656). The Telemetry Collector of controller 528 periodically collects information including metrics for network traffic and power usage of network devices 502 (658). Controller 528 periodically iterate over network devices 502 and, for each network devices 502, find the server 506 connected to the corresponding network device 502 (660).

Controller 528 determines if there is a next network device 502 (662). If there is not a next network device 502 (e.g., "NO" block of 662), controller 528 returns to operation 660. If there is a next network device 502 (e.g., "YES" block of 662), for each server connected to the network device 502, controller 528 predicts or infers infer a network traffic using ML system 33 by passing metrics indicative of CPU throttling level to the ML system 33 (664). Controller 528 aggregates predicted network traffic of servers 506 connected to the network device 502 to determine an expected network traffic at the network device 502 (666). Controller 528 calculates an expected traffic capacity of the network device 502 using the predicted traffic and a total traffic capacity of the network device 502 (668). Controller 528 determines a power throttling level to be applied to the network device 502 using the calculated traffic capacity (668). Controller 528 pushes the determined power throttling level to the corresponding network device 502 (672).

### Intelligent Adaptive power throttling of Network Services

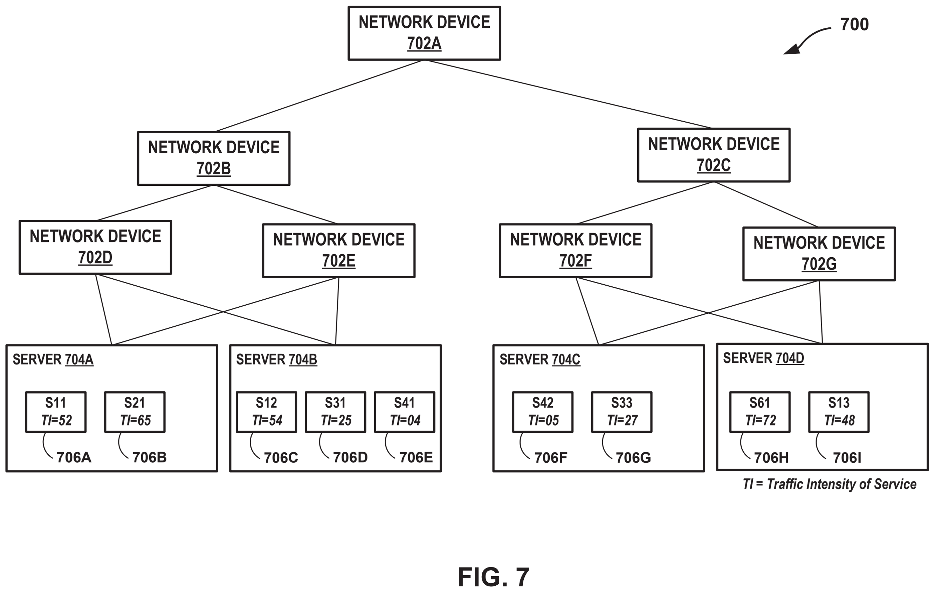

FIG. 7 is a block diagram illustrating an example computer network 700 with varying traffic behavior of services. Computer network 700 includes network devices 702A-702G (collectively, "network devices 702") and servers 704A-704D (collectively, "servers 704") executing one or more applications 706A-706I (collectively, "applications 706").

In the data center networks, the traffic is not always the same. The traffic varies depending on the network traffic generated by the application services running on the servers. Like compute intensity of services, the traffic intensity of services is not always the same. Most of the services exhibit some pattern of traffic intensity that varies with time.

As shown in FIG. 7, at any time, services will have different traffic intensities. Every service will have its own traffic intensity pattern. As depicted in FIG. 7, the services are associated with a traffic intensity (TI), with higher values of TI associated with a higher relative traffic intensity and lower values of TI associated with a lower relative traffic intensity.

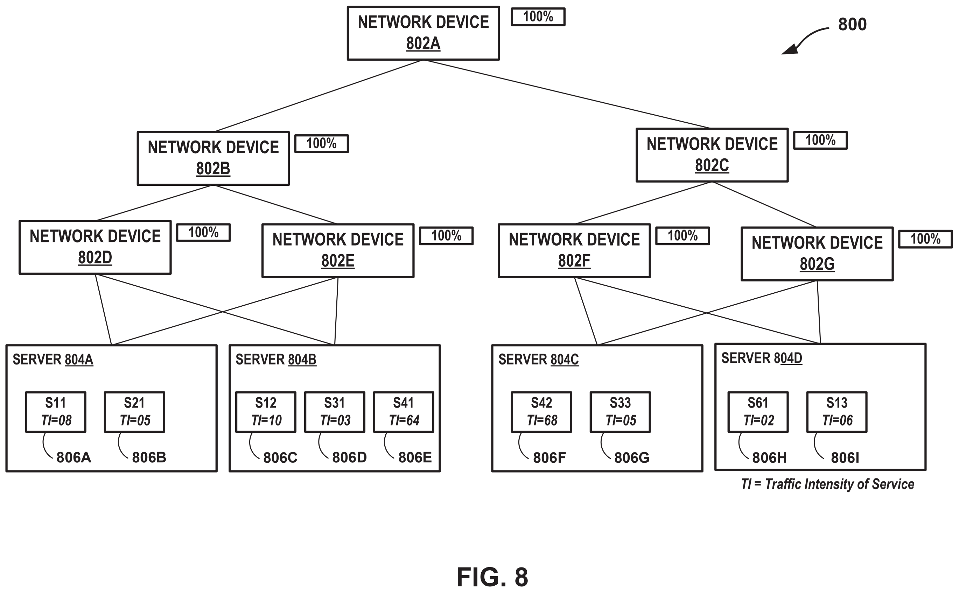

FIG. 8 is a block diagram illustrating an example computer network 800 that includes network devices 802A-802G (collectively, "network devices 802") at full capacity wasting power (depicted as box "100%). Computer network 800 further includes servers 804A-804D (collectively, "servers 804") executing one or more applications 806A-806I (collectively, "applications 806"). The example computer network 800 of FIG. 8 does not operate in accordance with the techniques of the disclosure.

The problem with this scenario is that network devices 802 are not aware of the changing traffic behavior of application services 806 running on servers 806. Conventionally, an administrator may configure network devices 802 statically for maximum capacity by considering a maximum capacity of server 804. Hence, network devices 802 always run at full capacity, and they waste processing cycles and power when services 806 running on the servers 804 change their traffic behavior. This leads to power leakage. In the absence of the techniques of this disclosure, network controllers are not configured to monitor the application services traffic behavior and adjust network capacity accordingly. As shown in FIG. 8, except the application services 806E (S41) and 806F (S42), all services 806 are reduced to traffic intensity below 10. But network devices 802 are still configured run at full capacity, which is redundant and waste of power.

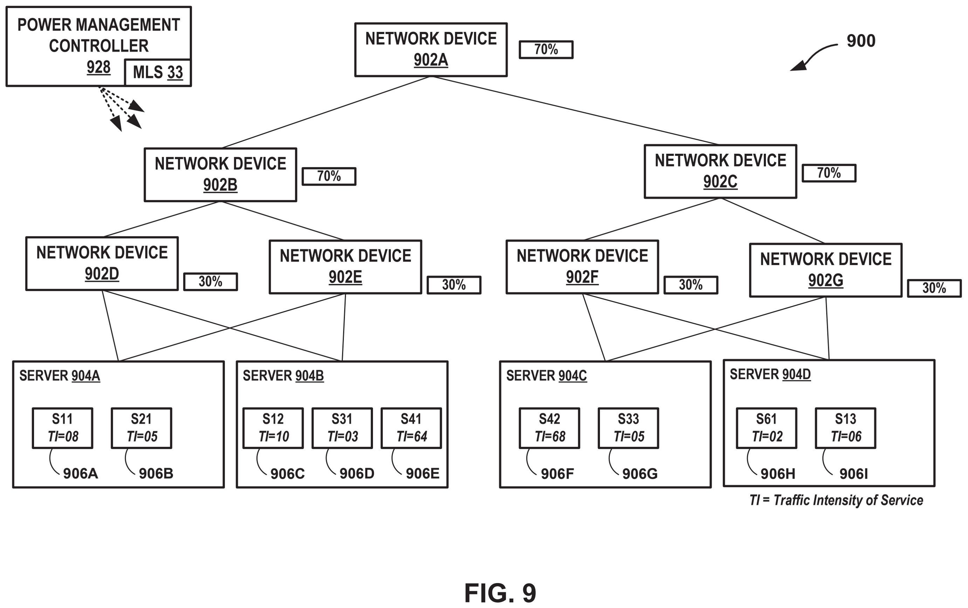

FIG. 9 is a block diagram illustrating an example computer network 900 that implements network throttling considering application traffic behavior, in accordance with the techniques of the disclosure. Computer network 900 includes network devices 902A-902G (collectively, "network devices 902"), servers 904A-904D (collectively, "servers 904") executing one or more applications 906A-906I (collectively, "applications 906"), and power management controller 928. In some examples, network devices 902 are examples of switches 16, 18 and servers 904 are examples of servers 12 of FIG. 1. Power management controller 928 may be an example of power management controller 28 of FIG. 1.

Conventionally, a system may perform power throttling of network devices, such as switches or routers, solely based on the network traffic patterns passing through them, which may not be accurate. Unexpected spikes in network traffic may cause network disruptions when network devices are power throttled based on past traffic patterns.

The traffic pattern of each network device 902 may be dependent on network traffic generated by servers 904 connected to the corresponding network device 902. In turn, the network traffic generation by servers 904 depends on a profile of the application, service, or workloads scheduled to run on servers 904. These workloads running on servers 904 can be considered to be primarily traffic-intensive or compute-intensive. Any conventional methodology that attempts to perform dynamic traffic capacity calculation for network devices without considering the traffic intensity metric of servers 904 likely will not be accurate.

The techniques of the disclosure define a new metric referred to as "traffic intensity." As described herein, a metric for traffic intensity of a server 904 refers to a traffic-to-CPU usage Ratio (also referred to herein as "TCUR")) of a service, workload, or application hosted by server 904, or of a server 904 itself. As described in more detail below, controller 928 may determine the traffic intensity metric as a cumulative value of all workloads running on a particular server 904. In some examples, the traffic intensity is defined as the ratio of network traffic of a server 904 to a CPU Usage of the server 904, and is expressed as "bytes-per-second" / "CPU utilization percentage". For example, a traffic intensity of server 904A for 1 day may be expressed as 54 GBps(average) / 72% CPU utilization = 54 GBps / 0.72 = a traffic intensity of 75 GBps per unit CPU load.

In some examples, controller 928 monitors information including CPU usage and network traffic metrics of servers 904, and collects and stores the metrics in a database, such as a cloud database. Controller 928 trains ML system 33 with the collected metrics to predict a traffic intensity or a TCUR of servers 904.

The techniques of the disclosure enable power management controller 928 to dynamically adjust the network capacity of network devices 902 by considering the traffic intensity of application services 906 running on servers 904 which are attached to network devices 902. In some examples, power management controller 928 may be implemented as part of a network controller, such as controller 24 of FIG. 1. Power management controller 928 collects traffic intensity metrics of the applications 906 running on servers 904 on a time series basis.

Power management controller 928 employs machine learning techniques to forecast and learn traffic intensity behavior of application services 906 to derive the network capacity. The traffic intensity behavior or pattern of the application services 906 helps power management controller 928 reduce the capacity of network devices 902 (or other performance characteristics) by selectively choosing a portion of network 900 to throttle (such as one or more particular network devices 902). For example, controller 928, when Adaptive Power Throttling for network devices 902 is enabled by an administrator, requests trained ML system 33 to predict or infer an expected network traffic generated by servers 904 connected to each network device 904. Controller 928 determines an expected network traffic capacity for the each network device 904 based on the ML model-inferred network traffic predicted for servers 904. In some examples, controller 928 determines a power throttling level (in terms of percentage band) to be applied to each network device 904 based on an expected network traffic capacity required to satisfy the demand of the predicted traffic intensity of servers 904. Controller 928 pushes the power throttling level configuration to network devices 902.

In some examples, power management controller 928 uses power throttling methods of network devices 902 to decrease/increase the network capacity or capabilities on the fly without shutting down any network devices 902 of the network 900. Typically, network devices 902 support power throttling techniques, such as adjusting processing clock frequencies, adjusting operating voltages, power-gating the ASICs, turning off redundant ASICs, etc.

The techniques of the disclosure propose a time-bound and iterative power throttling of network devices 902 of network 900 based on traffic intensity patterns of the application services 906 running (or scheduled to run) on the servers 904. As shown in the example of FIG. 9, except for applications 906E (S41) and 906F (S42), all services 906 are running with lowest traffic intensity. In this case, power management controller 928 throttles network devices 902 to run at lower processing capacity, while still retaining sufficient capacity to meet the traffic intensity of applications 906E (S41) and 906F (S42). Accordingly, using the techniques of the disclosure, controller 928, as described herein, may determine a power throttling level of each of network devices 902 based on network traffic generation intensity of application, services, or workloads of servers 904. In addition, controller 928, as described herein, may predict a power throttling level at a level specific to each individual network device 902, rather than predicting network demands at a general level across the entire network. As depicted in the example of FIG. 9, power management controller 928 has configured network devices 902A-902C to operate at 70% of maximum power usage (depicted as box "70%") and network devices 902D-902G to operate at 30% of maximum power usage (depicted as box "30%"), thereby conserving power.

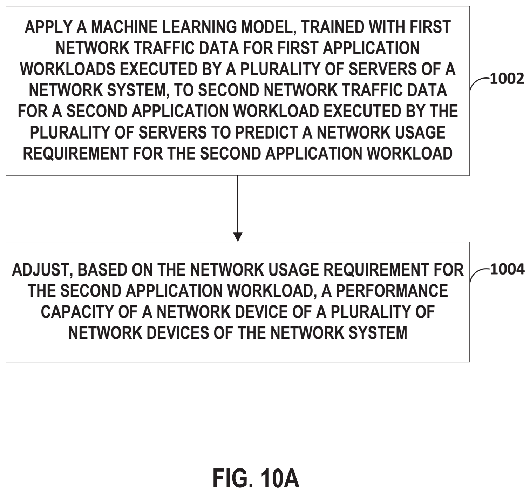

FIG. 10A is a flowchart illustrating an example operation in accordance with the techniques of the disclosure. In particular, FIG. 10A describes an operation of power management controller 928 of FIG. 9. Power management controller 928 applies a machine learning model, trained with first network traffic data for first application workloads 906 executed by a plurality of servers 904 of a network system 900, to second network traffic data for a second application workload 906 executed by the plurality of servers 904 to predict a network usage requirement for the second application workload 904 (1002). Power management controller 928 adjusts, based on the network usage requirement for the second application workload 904, a performance capacity of a network device 902D of a plurality of network devices 902 of the network system (1004).

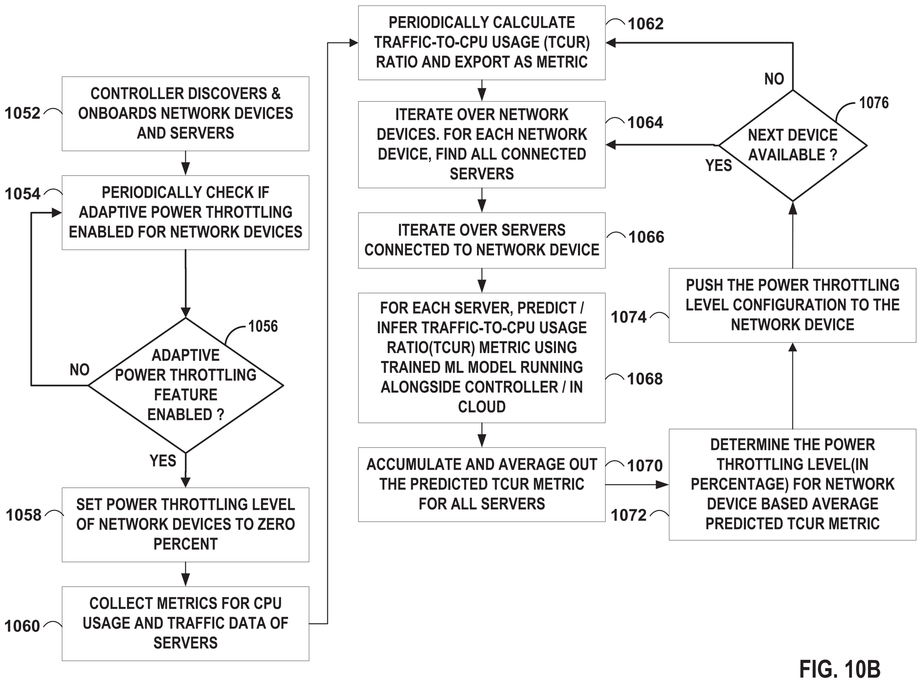

FIG. 10B is a flowchart illustrating an example operation in accordance with the techniques of the disclosure. In particular, FIG. 10B describes an operation of power management controller 928 of FIG. 9.

Controller 928 discovers and onboards network devices 902 and servers 904 (1052). Controller 928 periodically checks if Adaptive Power Throttling is enabled for network devices 902 (1054). In response to determining that Adaptive Power throttling is not enabled (e.g., "NO" block of 1056), controller 928 returns to step 1054.

In response to determining that Adaptive Power throttling is enabled (e.g., "YES" block of 1056), controller 928 sets a power throttling level of network devices 902 to zero percent (1058). Controller 928 collects information including metrics for CPU usage and network traffic data of servers 904 (1060). Controller 928 periodically calculates a traffic-to-CPU usage ration (TCUR), and exports the calculated TCUR as a metric (1062).

Controller 928 iterates over network devices 902 by, for each network device 902, controller 928 find all connected servers 904 (1064). Further, Controller 928 iterates over servers 904 connected to the network device 902 (1066). For each server 904 connected to the corresponding network device 902, controller 928 predicts or infers a metric indicating a TCUR using a trained ML system 33 (1068). In some examples, ML system 33 comprises an ML model running alongside controller 928, or alternatively, an ML model provided by a cloud service provider.

Controller 928 accumulates and averages out a predicted TCUR metric for each of servers 904 (1070). Controller 928 determines a power throttling level (e.g., as a percentage) for the corresponding network device 902 based on the metric specifying the Average Predicted TCUR (1072). Controller 928 pushes the power throttling level configuration to the network device 902.

In response to determining that a next network device 902 is available (e.g., "YES" block of 1076), Controller 928 returns to step 1064 for analysis of the next network device 902. In response to determining that a next network device 902 is not available (e.g., "NO" block of 1076), Controller 928 returns to step 1062 to calculate metrics for TCUR of servers 904.

### Adaptive Power Manager for Campus Networks

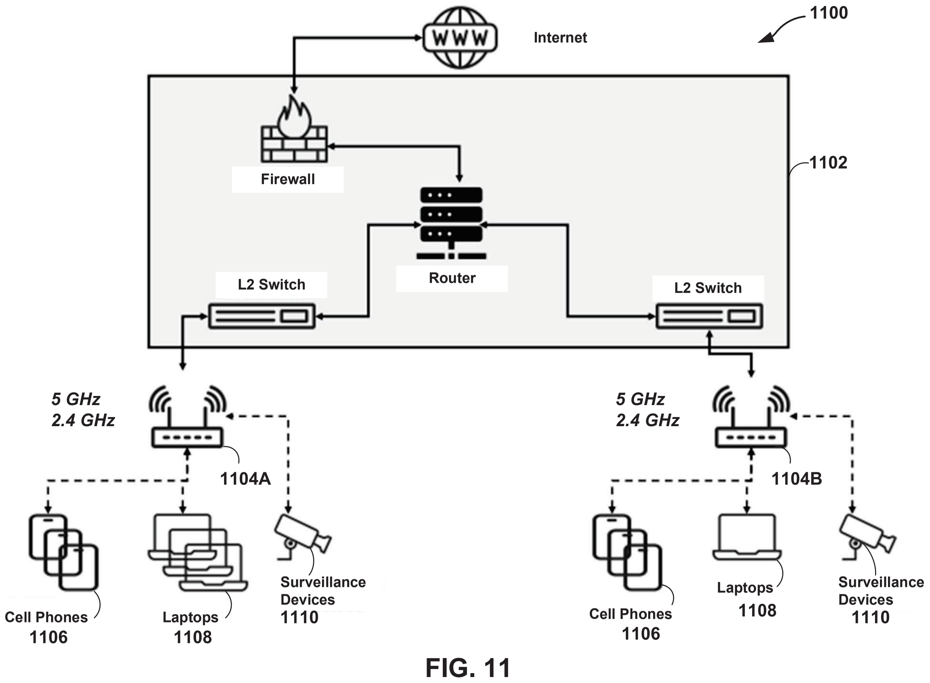

FIG. 11 is a block diagram illustrating an example computer network 1100 including a campus network with wireless access points (APs) 1104A-1104B (collectively, "wireless APs 1104"). The example computer network 1100 of FIG. 11 does not operate in accordance with the techniques of the disclosure.

The campus networks include wireless APs 1104 to provide connectivity to the user devices like mobile phones 1106, laptops 1108, and security surveillance devices 1110. The wireless APs 1104 operate at multiple frequencies, such as 5 GHz and 2.5 GHz. The wireless APs 1104 consume more power operating higher frequency compared with lower frequencies. Some of the user devices, like user laptops 1108, need higher frequency bands, while cell phone devices 1106 need lower frequency device bands.

The wireless APs 1104 may not always have same kind of devices 1106, 1108, 1110 connected to them. In a campus, some wireless APs 1104 connect to higher number of devices 1106, 1108, 1110 where user activity is higher. So, the number of devices 1106, 1108, 1110 connected to wireless APs 1104 varies with time and user activities. In the example of FIG. 11, wireless AP 1104B does not have any laptop devices connected which require a 5 GHz channel. Nevertheless, conventionally, an administrator may configure wireless AP 1104B to run at full capacity with all channels enabled.

For example, in a college campus network, during class hours all wireless APs 1104 near to classrooms get connected to more devices 1106, 1108, 1110 and fewer devices 1106, 1108, 1110 during lunch hours or after class hours. Thus, the wireless APs 1104 may not have a same number of connected devices 1106, 1108, 1110 at all times, and the usage behavior of devices 1106, 1108, 1110 on wireless APs 1104 may follow certain connectivity patterns.

From a sustainability perspective, the problem with campus networks such as network 1100 is that wireless APs 1104 operate at a same frequency and a same capacity, irrespective of the device connectivity pattern. There are some conventional techniques employed, such wireless APs 1104 entering sleep mode when they are idle for certain amount of time. But these techniques may not reduce the energy consumption significantly, as one or two passing devices 1106, 1108, 1110 can trigger the wireless APs 1104 back from sleep modes. The lack of connectivity patterns and predictability of the connectivity patterns makes wireless APs 1104 waste power during low connectivity windows when wireless APs 1104 are statically configured, as may performed according to conventional management techniques.

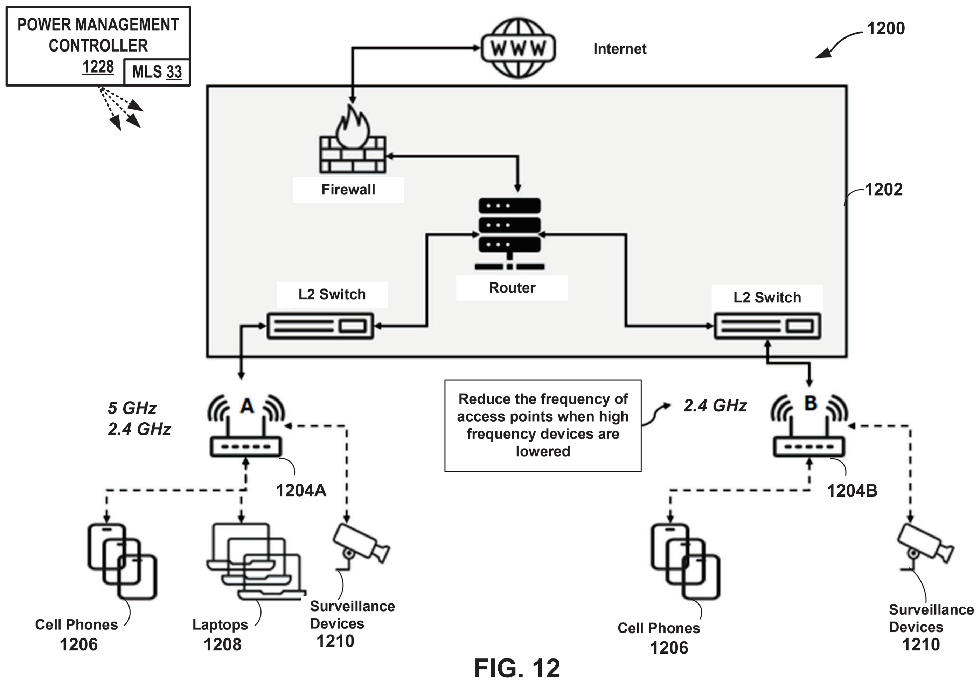

FIG. 12 is a block diagram illustrating an example computer network 1200 including a power management controller 1228 that adjusts an operating mode of wireless access points (APs) 1204A-1204B (collectively, "wireless APs 1204") based on predicted connectivity patterns, in accordance with the techniques of the disclosure. Computer network 1200 includes a campus network 1202 that includes wireless APs 1204 which provide connectivity to user devices like mobile phones 1206, laptops 1208, and security surveillance devices 1210. In some

In campus networks, network devices, such as APs 1204, operate at different operating channel frequencies by using different radios. The most-used operating channel frequency bands are 2.4 GHz and 5 GHz. The energy consumption of APs 1204 depends on the operating frequency. According to conventional management techniques, when no client devices that require higher operating channel frequencies (e.g., a 5 GHz frequency band), such as cell phones 1206, laptops 1208, or surveillance devices 1210, are presently connected with an AP, an AP may be configured to operate at such higher frequencies and hence, wastes power.

Power management controller 1228 employs a machine learning-based, automated method that predicts a connectivity pattern of wireless APs 1204 and dynamically adjusts an operating mode of wireless APs 1204. In some examples, power management controller 1228 is an adaptive power manager feature implemented within a network controller which manages the wireless APs 1204 and backend network, such as network controller 32 of FIG. 1. In some examples, wireless APs 1204 are examples of switches 16, 18 of FIG. 1. Power management controller 1228 may be an example of power management controller 28 of FIG. 1.

In accordance with the techniques of the disclosure, power management controller 1228 monitors APs 1204 for the connections at each different frequency range (or band) across each time interval of a timeline. Controller 1228 collects information for APs 1204, the information including a profile for each connected client device 1206, 1208, 1210 comprising an operating channel frequency active across each different time interval across a timeline. Power management controller 1228 uses the collected information and data to train ML system 33 to predict a connectivity pattern of client devices 1206, 1208, 1210 to APs 1204, for each operating channel frequency, and at different times.

In some examples, power management controller 1228 collects connectivity and user device profile information of every wireless APs 1204 of campus network 1202. Power management controller 1228 collects the device profile and connectivity data of wireless APs 1204 periodically and stores the collected data in a time series manner.

Power management controller 1228 forecasts or predicts a connectivity pattern for wireless APs 1204 using machine learning models to predict devices 1206, 1208, 1210 expected to seek the connections with wireless APs 1204 in subsequent time windows. Power management controller 1228 trains the machine learning model with historical data of connectivity and the associated device profiles to predict the connectivity and device profiles pattern for every wireless APs 1204. For example, wireless APs 1204 located at cafeteria may be expected to have a connectivity pattern of high number of cell phone devices 1206 connecting for very short intervals. These wireless APs 1204 may not need to enable high frequency bands most of the time.

Controller 1228 infers a potential connectivity pattern of client devices 1206, 1208, 1210 to APs 1204 using the trained ML system 33. Controller 1228 requests ML model 33 to provide a predicted connectivity pattern for each AP 1204 and for each operating channel frequency for one or more time windows over a period of time, e.g., in 1 hour intervals for a next 24 hour period. Based on the predicted traffic pattern, controller 1228 activates or deactivates a radio of each AP 1204 for each operating channel frequency. By selectively turning on or off the radios of APs 1204 depending on predicted usage of a corresponding operating channel frequency, the techniques of the disclosure may enable APs 1204 to enable radios operating only at a frequency range that is predicted to be in use, which may enable an optimal reduction in power by disabling radios operating at a frequency range predicted not to be in use.

After predicting the connectivity pattern, power management controller 1228 modifies an operating mode of wireless APs 1204 according to their connectivity pattern. The power management controller 1228 may put some wireless APs 1204 to sleep mode for a defined amount of time or decrease / increase an operating channel frequency. In some examples, the power management controller 1228 adjusts the operating mode of the wireless APs 1204 in advance. As shown in FIG. 12, power management controller 1228 may reduce an operating frequency of wireless AP 1204B when there are no devices (like laptops 1208) which need 5 GHz channels.

In some examples, controller 1228 issues an instruction to shutdown a radio for a particular operating channel frequency to an AP 1204 only when the AP 1204 sees zero clients for the radio for the particular operating channel frequency for a configurable, specific minimum duration. For example, if AP 1204A does not have any 5 GHz devices connected for, e.g., a minimum duration of 30 minutes and controller 1228 predicts that AP 1204A will not have any client devices 1206, 1208, 1210 accessing the 5 GHz operating channel frequency for a next 30 minute period, controller 1228 issues an instruction to AP 1204A to shut down its 5GHz radio..

Using the techniques of the disclosure, controller 1228, operating as described herein, may predict connectivity patterns of client devices 1206, 1208, 1210 to APs 1204 for particular operating channel frequencies for one or more time intervals over a period of time using ML system 33 trained upon, e.g., WiFi operating channel frequency profiles of client devices 1206, 1208, 1210. In addition, controller 1228, using the techniques described herein, may perform selective, time-bound activating and deactivation of specific radios for specific operating channel frequencies of APs 1204. Accordingly, controller 1228, as described herein, may optimize the energy efficiency and reduce the energy consumption of APs 1204 without causing disruption to network 1200 and without performing a shutdown or power-off of APs 1204.

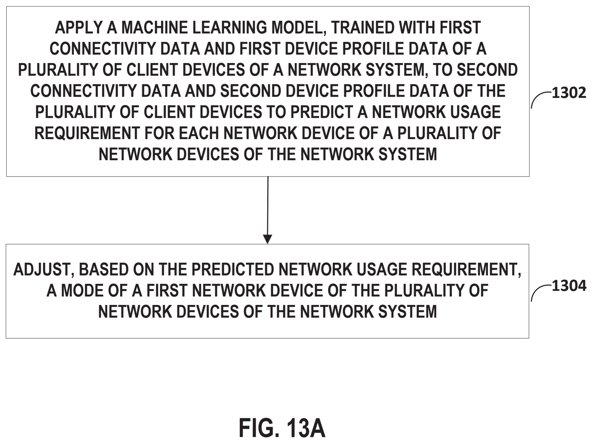

FIG. 13A is a flowchart illustrating an example operation in accordance with the techniques of the disclosure. In particular, FIG. 13A describes an operation of power management controller 1228 of FIG. 12. Power management controller 1228 applies a machine learning model, trained with first connectivity data and first device profile data of a plurality of client devices 1206, 1208, 1210 of a network system 1202, to second connectivity data and second device profile data of the plurality of client devices 1206, 1208, 1210 to predict a network usage requirement for each network device 1204 of a plurality of network devices 1204 of the network system 1202 (1302). Power management controller 1228 adjusts, based on the predicted network usage requirement, a mode of a first network device 1204B of the plurality of network devices 1204 of the network system (1304).

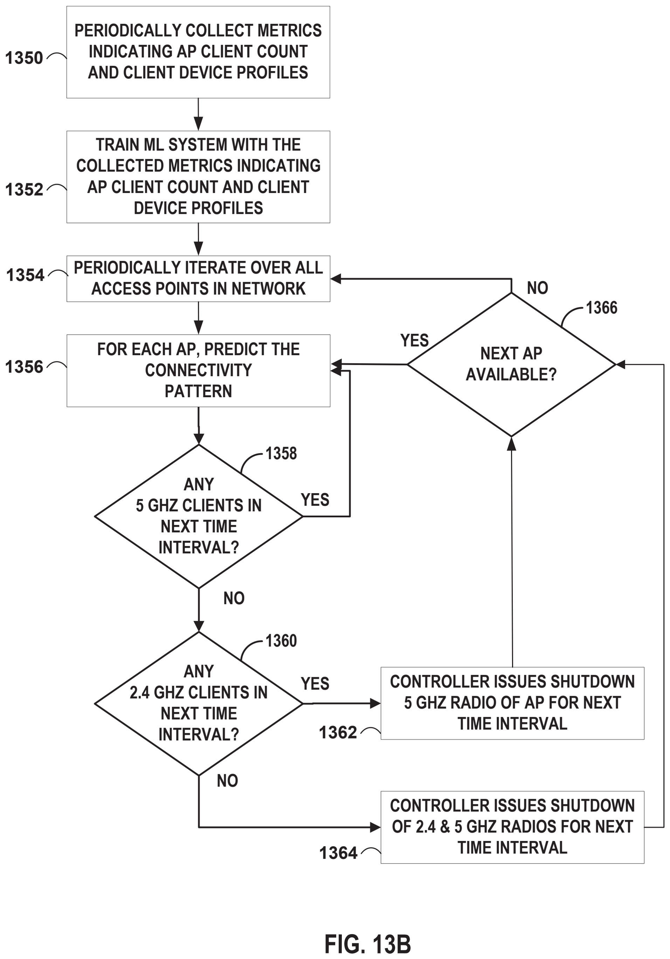

FIG. 13B is a flowchart illustrating an example operation in accordance with the techniques of the disclosure. In particular, FIG. 13B describes an operation of power management controller 1228 of FIG. 12.

For example, controller 1228 periodically collects, for each AP 1204, information including a count of client devices 1206, 1208, 1210 connected to the corresponding AP 1204 and a device profile for each client devices 1206, 1208, 1210, the device profile comprising an operating channel frequency profile (1350). Controller 1228 trains ML system 33 with the collected information indicating the count of client devices 1206, 1208, 1210 and the device profiles for client devices 1206, 1208, 1210 (1352).

Periodically, controller 1228 iterates over each of APs 1204 in network 1200 (1354). First, controller 1228 predicts, for each AP 1204, a connectivity pattern of client devices 1206, 1208, 1210 for each operating channel frequency supported by radios of the AP 1204 (1356). For each AP 1204, controller 1228 determines whether any client devices using the 5.0 GHz operating channel frequency are predicted to connect to the AP 1204 in a next time interval (e.g., over the next T hours) (1358). Based on determining that at least one client device 1206, 1208, 1210 is predicted to connect to the AP 1204 using the 5 GHz operating channel frequency in the next time interval (e.g., "YES" block of 1358), controller 1228 leaves both the 2.4 GHz and 5.0 GHz radios of the AP 1204 active and proceeds to predicting the connectivity pattern for a next AP 1204 at step 1356.

Based on determining that no client devices 1206, 1208, 1210 are predicted to connect to the AP 1204 using the 5 GHz operating channel frequency in the next time interval (e.g., "NO" block of 1358), controller 1228 determines whether any client devices using the 2.4 GHz operating channel frequency are predicted to connect to the AP 1204 in the next time interval (e.g., over the next T hours) (1360). Based on determining that no client devices 1206, 1208, 1210 are predicted to connect to the AP 1204 using the 2.4 GHz operating channel frequency in the next time interval (e.g., "NO" block of 1358), controller 1228 issues a shutdown of both the 2.4 and 5 GHz radios of the AP 1204 for the next time interval.

Based on determining that that at least one client device 1206, 1208, 1210 is predicted to connect to the AP 1204 using the 2.4 GHz operating channel frequency in the next time interval (e.g., "YES" block of 1358), controller 1228 issues a shutdown of only the 5 GHz radio (and not the 2.4GHz radio) of the AP 1204 for the next time interval. Regardless of the determination at step 1360, controller 1228 proceeds to step 1366 to determine whether a next AP 1204 is available for analysis. If so (e.g., "YES" block of 1366), controller 1228 proceeds to step 1356 to predict a connectivity pattern for the next AP 1204. If a next AP is not available for analysis (e.g., "NO" block of 1366), controller 1228 returns to step 1354 to periodically iterate over the APs 1204 for analysis of predicted connectivity patterns.

The following examples may illustrate one or more aspects of the disclosure.

Example A1. A method comprising: applying a machine learning model to a time series database of device information for a plurality of client devices of a network system to predict a network usage requirement of the plurality of client devices for a next time interval; and adjusting, based at least in part on the predicted network usage requirement of the plurality of client devices for the next time interval, a network capability of a network device of a plurality of network devices of the network system.

Example A2. The method of example A1, wherein the device information for the plurality of client devices comprises, for each time interval of a plurality of time intervals, one or more of: a central processing unit (CPU) utilization; a memory utilization; a network bandwidth consumption; a device make and model; a device configuration; or a physical characteristic.

Example A3. The method of any of example A1 to A2, wherein adjusting the network capability of the network device comprises one or more of: adjusting a bandwidth provided by the network device; adjusting an energy consumption of the network device; adjusting a clock frequency of a central processing unit (CPU) of the network device; adjusting an operating voltage of the network device; power-gating an Application-specific Integrated Circuit (ASIC) of the network device; adjusting a power level of an antennae or radio of the network device; or adjusting a frequency of an operating channel of the network device.

Example A4. The method of any of example A1 to A3, wherein the plurality of client devices comprise one or more of: a plurality of servers; or a plurality of mobile computing devices.

Example A5. The method of any of example A1 to A3, wherein the network system comprise at least one of a data center, an enterprise network, or a campus network.

Example A6. A computing system configured to perform the method of any of examples A1 to A5.

Example A7. Computer-readable media comprising instructions that, when executed, are configured to cause processing circuitry to perform the method of any of examples A1 to A5.

Example B1. A method comprising: applying a machine learning model, trained with server configuration data associated with a plurality of servers of a network system and network traffic data associated with a plurality of network devices of the network system, to an adjustment to a configuration of a server of the plurality of servers to determine a network usage requirement of the plurality of network devices resulting from the adjustment to the configuration of the server.

Example B2. The method of example B1, wherein the adjustment to the configuration of the server is based at least in part on a resource utilization of the server.

Example B3. The method of any of examples B1 to B2, wherein the adjustment to the configuration of the server comprises a throttling of a performance of the server.

Example B4. The method of any of examples B1 to B3, wherein the adjustment to the configuration of the server comprises an adjustment to at least one of a number of active central processing unit (CPU) cores of the server or a number of active graphic processing unit (GPU) cores of the server.

Example B5. The method of any of examples B1 to B4, wherein the network usage requirement comprises a bandwidth of a network device of the plurality of network devices consumed by the server.

Example B6. The method of any of examples B1 to B5, further comprising: adjusting, based on the network usage requirement resulting from the adjustment to the configuration of the server, a performance of a network device of the plurality of network devices.

Example B7. The method of example B6, wherein adjusting the performance of the network device comprises at least one of: adjusting a bandwidth provided by the network device; adjusting a clock frequency of a central processing unit (CPU) of the network device; adjusting an operating voltage of the network device; or power-gating an Application-specific Integrated Circuit (ASIC) of the network device.

Example B8. A computing system configured to perform the method of any of examples B1 to B7.

Example B9. Computer-readable media comprising instructions that, when executed, are configured to cause processing circuitry to perform the method of any of examples B1 to B7.

Example C1. A method comprising: applying a machine learning model, trained with first network traffic data for first application workloads executed by a plurality of servers of a network system, to second network traffic data for a second application workload executed by the plurality of servers to predict a network usage requirement for the second application workload; and adjusting, based on the network usage requirement for the second application workload, a performance capacity of a network device of a plurality of network devices of the network system.

Example C2. The method of example C1, wherein adjusting the performance of the network device comprises at least one of: adjusting a bandwidth provided by the network device; adjusting a clock frequency of a central processing unit (CPU) of the network device; adjusting an operating voltage of the network device; or power-gating an Application-specific Integrated Circuit (ASIC) of the network device.

Example C3. The method of any of examples C1 to C2, wherein the machine learning model is configured to predict the network usage requirement for the second application workload for a next time interval is configured to increase as compared to a second network usage requirement for the second application workload for a previous time interval, and wherein adjusting the performance of the network device comprises increasing a performance of the network device.

Example C4. The method of any of examples C1 to C2, wherein the machine learning model is configured to predict the network usage requirement for the second application workload for a next time interval is configured to decrease as compared to a second network usage requirement for the second application workload for a previous time interval, and wherein adjusting the performance of the network device comprises decreasing a performance of the network device.

Example C5. The method of any of examples C1 to C4, wherein adjusting the performance of the network device comprises increasing a performance of a first subset of the plurality of network devices and decreasing a performance of a second subset of the plurality of the network devices.

Example C6. A computing system configured to perform the method of any of examples C1 to C5.

Example C7. Computer-readable media comprising instructions that, when executed, are configured to cause processing circuitry to perform the method of any of examples C1 to C6.

Example D1. A method comprising: applying a machine learning model, trained with first connectivity data and first device profile data of a plurality of client devices of a network system, to second connectivity data and second device profile data of the plurality of client devices to predict a network usage requirement for each network device of a plurality of network devices of the network system; and adjusting, based on the predicted network usage requirement, a mode of a first network device of the plurality of network devices of the network system.

Example D2. The method of D1, wherein adjusting the mode of the first network device comprises at least one of: enabling or disabling a 5 Gigahertz (GHz) band of the first network device; enabling or disabling a 2.5 GHz band of the first network device; causing the first network device to enter or exit a sleep mode; or adjusting a frequency of an operating channel of the first network device.

Example D3. The method of any of examples D1 to D2, wherein the client devices comprise one or more cell phones configured to use a 2.5 Gigahertz (GHz) band and one or more laptops configured to use the 2.5 GHz band and a 5 GHz band, and wherein the plurality of network devices comprise a plurality of access points (APs).

Example D4. The method of any of examples D1 to D3, wherein adjusting the mode of the first network device comprises disabling a 5 Gigahertz (GHz) band of the network device for a next time interval based on a prediction that client devices will not use the 5 GHz band during the next time interval.

Example D5. The method of any of examples D1 to D4, further comprising: collecting the first connectivity data and the first device profile data; and storing, in a time series database, the first connectivity data and the first device profile data.

Example D6. A computing system configured to perform the method of any of examples D1 to D5.

Example D7. Computer-readable media comprising instructions that, when executed, are configured to cause processing circuitry to perform the method of any of examples D1 to D5.

The solution proposes a machine learning based automated technique that predicts the connectivity pattern of the access points and dynamically adjusts the access points operating modes. The solution implemented as adaptive power manager feature as part of network controller which manages the access points and backend network. The solution enables the network controller to collect the connectivity and user device profile information of every access point of the campus network. The network controller collects the device profile and connectivity data of access points periodically and stores the collected data in a time series manner.

The controller forecasts or predicts the connectivity pattern for access point using machine learning models to know the devices expected to seek the connections with access point in the subsequent time windows. The controller trains the machine learning model with historical data of connectivity and the associated device profiles to predict the connectivity and device profiles pattern for every access point. For example, the access points located at cafeteria are expected to have the connectivity pattern of high number of cell phone devices connecting for very short intervals. The access points may not need to enable high frequency bands most of the time.

After predicting the connectivity pattern, the controller modifies the operating modes of the access points according to their connectivity pattern. The controller may put some access points to sleep mode for defined amount of time or decrease / increase the operating channel frequency. The controller adjusts the operating mode of the access points in advance. As shown in FIG. 8, the controller may reduce the operating frequency of access point B when there are no devices like laptop which need 5 GHz channels.

The techniques described in this disclosure may be implemented, at least in part, in hardware, software, firmware or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in a computer-readable medium, such as a computer-readable storage medium and/or a computer-readable transmission medium, containing instructions. Instructions embedded or encoded in a computer-readable medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media. A computer-readable transmission media, by which instructions may be conveyed, may include carrier waves, transmission signals or the like. A computer-readable transmission medium may convey instructions between components of a single computer system and/or between plural separate computer systems.

Thus, from one perspective, there have been described techniques for improved energy efficiency of network devices of a network system. For example, a computing system obtains time series data comprising information about computing devices of a computer network. The computing devices access other devices of the computer network via network devices that exchange network traffic of the computing devices. The computing system applies a machine learning system, trained with historical time series data, to the obtained time series data to predict a requirement of one or more of the network devices for exchanging network traffic of the computing devices for a next time interval. The computing system adjusts, based at least in part on the predicted requirement for the next time interval, operation of the one or more of the network devices.

Further examples of feature combinations taught by the present disclosure are set out in the following numbered clauses.

Clause 1. A computing system comprising: storage media; and processing circuitry in communication with the storage media, the processing circuitry configured to: obtain time series data comprising information about computing devices of a computer network, wherein the computing devices access other devices of the computer network via network devices that exchange network traffic of the computing devices; apply a machine learning system, trained with historical time series data, to the obtained time series data to predict a requirement of one or more of the network devices for exchanging network traffic of the computing devices for a next time interval; and adjust, based at least in part on the predicted requirement for the next time interval, operation of the one or more of the network devices.

Clause 2. The computing system of clause 1, wherein the computing devices comprise servers hosting one or more application workloads, wherein the information about the computing devices indicates a power throttling state of each of the servers, and wherein the historical time series data indicates historical power throttling states of the servers and historical network bandwidth usage of the network devices corresponding in time to the power throttling states of the servers.

Clause 3. The computing system of clause 1 or 2, wherein the computing devices comprise servers hosting application workloads, wherein the information about the computing devices indicates a central processing unit (CPU) usage or a graphic processing unit (GPU) usage of each of the servers, and wherein the historical time series data indicates historical CPU usage or GPU usage of the servers and historical network bandwidth usage of the network devices corresponding in time to the CPU usage or GPU usage of the servers.

Clause 4. The computing system of clause 1, 2 or 3, wherein the computing devices comprise servers hosting application workloads, wherein the information about the computing devices indicates a resource utilization of each of the servers, and wherein the historical time series data indicates historical resource utilization of the servers and historical network bandwidth usage of the network devices corresponding in time to the resource utilization of the servers.

Clause 5. The computing system of any preceding clause, wherein the computing devices comprise servers hosting application workloads, and wherein the information about the computing devices indicates a network traffic intensity of each of the application workloads, and wherein the historical time series data indicates historical network traffic intensities of the application workloads hosted by the servers and historical network bandwidth usage of the network devices corresponding in time to the network traffic intensities of the application workloads.

Clause 6. The computing system of any preceding clause, wherein the computing devices comprise user equipment (UE) devices, and wherein the network devices comprise wireless Access Points (APs), wherein the information about the computing devices indicates an operating channel frequency of each of the UE devices, and wherein the historical time series data indicates operating channel frequencies of the UE devices and network usage patterns of the wireless APs corresponding in time to the operating channel frequencies of the UE devices.

Clause 7. The computing system of any preceding clause, wherein, to adjust the operation of the one or more of the network devices, the processing circuitry is configured to adjust one or more operational parameters affecting energy consumption of the network device.

Clause 8. The computing system of any preceding clause, wherein, to adjust the operation of the network device, the processing circuitry is configured to adjust at least one of: an operational state of a packet processing unit of the network device; a power budget for one or more packet processing units of the network device; a clock frequency of a central processing unit (CPU) of the network device; or a power level of an antennae or radio of the network device.

Clause 9. The computing system of any preceding clause, wherein the network device is configured to use one or more of a first operating channel operating at a first frequency comprising about a 2.5 GHz band and a second operating channel operating at a second frequency comprising about a 5 GHz band, and wherein to adjust the operation of the network device, the processing circuitry is configured to: enable the first operating channel and disable the second operating channel; or enable both of the first operating channel and the second operating channel.

Clause 10. The computing system of any preceding clause, wherein the requirement comprises a network performance requirement, and wherein the processing circuitry is configured to adjust the operation of the one or more network devices by adjusting one or more operational parameters that increase a network bandwidth throughput of the one or more network devices based on a prediction by the machine learning system of an increase in the network performance requirement for the next time interval as compared to a past network performance requirement for a previous time interval.

Clause 11. The computing system of any preceding clause, wherein the requirement comprises a network performance requirement, and wherein the processing circuitry is configured to adjust the operation of the one or more network devices by adjusting one or more operational parameters that decrease a network bandwidth throughput of the one or more network devices based on a prediction by the machine learning system of a decrease in the network performance requirement for the next time interval as compared to a past network performance requirement for a previous time interval.

Clause 12. The computing system of any preceding clause, wherein the requirement comprises a network performance requirement, wherein the processing circuitry is configured to: adjust operation of a first network device of the one or more network devices so as to increase energy consumption of the first network device based on a prediction by the machine learning system of an increase in a requirement of the first network device for exchanging network traffic of a first computing device of the computing devices for the next time interval as compared to a past requirement of the first network device for a previous time interval, and adjust operation of a second network device of the one or more network devices so as to decrease energy consumption of the second network device based on a prediction by the machine learning system of a decrease in a requirement of the second network device for exchanging network traffic of a second computing device of the computing devices for the next time interval as compared to a past requirement of the second network device for the previous time interval.

Clause 13. The computing system of any preceding clause, wherein the machine learning system is trained with historical time series data of the computing devices and the network devices.

Clause 14. A method comprising: obtaining, by processing circuitry of a computing system, time series data comprising information about computing devices of a computer network, wherein the computing devices access other devices of the computer network via network devices that exchange network traffic of the computing devices; applying, by the processing circuitry, a machine learning system, trained with historical time series data, to the obtained time series data to predict a requirement of one or more of the network devices for exchanging network traffic of the computing devices for a next time interval; and adjusting, by the processing circuitry and based at least in part on the predicted requirement for the next time interval, operation of the one or more of the network devices.

Clause 15. The method of clause 14, wherein the computing devices comprise servers hosting one or more application workloads, wherein the information about the computing devices indicates a power throttling state of each of the servers, and wherein the historical time series data indicates historical power throttling states of the servers and historical network bandwidth usage of the network devices corresponding in time to the power throttling states of the servers.

Clause 16. The method of clause 14 or 15, wherein the computing devices comprise servers hosting application workloads, wherein the information about the computing devices indicates a central processing unit (CPU) usage or a graphic processing unit (GPU) usage of each of the servers, and wherein the historical time series data indicates historical CPU usage or GPU usage of the servers and historical network bandwidth usage of the network devices corresponding in time to the CPU usage or GPU usage of the servers.

Clause 17. The method of clause 14, 15 or 16, wherein the computing devices comprise servers hosting application workloads, and wherein the information about the computing devices indicates a network traffic intensity of each of the application workloads, and wherein the historical time series data indicates historical network traffic intensities of the application workloads hosted by the servers and historical network bandwidth usage of the network devices corresponding in time to the network traffic intensities of the application workloads.

Clause 18. The method of any of clauses 14 to 17, wherein the computing devices comprise user equipment (UE) devices, and wherein the network devices comprise wireless Access Points (APs), wherein the information about the computing devices indicates an operating channel frequency of each of the UE devices, and wherein the historical time series data indicates operating channel frequencies of the UE devices and network usage patterns of the wireless APs corresponding in time to the operating channel frequencies of the UE devices.

Clause 19. The method of any of clauses 14 to 18, wherein adjusting the operation of the one or more of the network devices comprises adjusting one or more operational parameters affecting energy consumption of the network device.

Clause 20. Computer-readable media comprising instructions that, when executed, cause processing circuitry to: obtain time series data comprising information about computing devices of a computer network, wherein the computing devices access other devices of the computer network via network devices that exchange network traffic of the computing devices; apply a machine learning system, trained with historical time series data, to the obtained time series data to predict a requirement of one or more of the network devices for exchanging network traffic of the computing devices for a next time interval; and adjust, based at least in part on the predicted requirement for the next time interval, operation of the one or more of the network devices.

Where a phrase similar to "at least one of A, B, and C" is used in the claims, it is intended that the phrase be interpreted to mean that A alone may be present in an embodiment; B alone may be present in an embodiment; C alone may be present in an embodiment; or that any combination of the elements A, B, and C may be present in a single embodiment, for example, A and B, A and C, B and C, or A and B and C.

Where a phrase similar to "one or more processors configured to X, Y, and Z" is used in the claims, it is intended that the phrase be interpreted to mean at least: that a processor A alone may perform functions X, Y, and Z; that two or more processors (e.g., processors A and B) may collectively perform functions X, Y, and Z; that a first processor A may perform functions X and Y and a second processor may perform function Z; or that a first processor A may perform function X, a second processor may perform function Y, and a third processor may perform function Z.

Various examples have been described. These and other examples are within the scope of the following claims.

## Claims

1. A computing system comprising:
storage media; and
processing circuitry in communication with the storage media, the processing circuitry configured to:
obtain time series data comprising information about computing devices of a computer network, wherein the computing devices access other devices of the computer network via network devices that exchange network traffic of the computing devices;
apply a machine learning system, trained with historical time series data, to the obtained time series data to predict a requirement of one or more of the network devices for exchanging network traffic of the computing devices for a next time interval; and
adjust, based at least in part on the predicted requirement for the next time interval, operation of the one or more of the network devices.

2. The computing system of claim 1,
wherein the computing devices comprise servers hosting one or more application workloads,
wherein the information about the computing devices indicates a power throttling state of each of the servers, and
wherein the historical time series data indicates historical power throttling states of the servers and historical network bandwidth usage of the network devices corresponding in time to the power throttling states of the servers.

3. The computing system of any of claims 1-2,
wherein the computing devices comprise servers hosting application workloads, wherein the information about the computing devices indicates a central processing unit, CPU, usage or a graphic processing unit, GPU, usage of each of the servers, and
wherein the historical time series data indicates historical CPU usage or GPU usage of the servers and historical network bandwidth usage of the network devices corresponding in time to the CPU usage or GPU usage of the servers.

4. The computing system of any of claims 1-3,
wherein the computing devices comprise servers hosting application workloads,
wherein the information about the computing devices indicates a resource utilization of each of the servers, and
wherein the historical time series data indicates historical resource utilization of the servers and historical network bandwidth usage of the network devices corresponding in time to the resource utilization of the servers.

5. The computing system of any of claims 1-4,
wherein the computing devices comprise servers hosting application workloads, and
wherein the information about the computing devices indicates a network traffic intensity of each of the application workloads, and
wherein the historical time series data indicates historical network traffic intensities of the application workloads hosted by the servers and historical network bandwidth usage of the network devices corresponding in time to the network traffic intensities of the application workloads.

6. The computing system of any of claims 1-5s,
wherein the computing devices comprise user equipment, UE, devices, and wherein the network devices comprise wireless Access Points, APs,
wherein the information about the computing devices indicates an operating channel frequency of each of the UE devices, and
wherein the historical time series data indicates operating channel frequencies of the UE devices and network usage patterns of the wireless APs corresponding in time to the operating channel frequencies of the UE devices.

7. The computing system of any of claims 1-6, wherein the network device is configured to use one or more of a first operating channel operating at a first frequency comprising about a 2.5 GHz band and a second operating channel operating at a second frequency comprising about a 5 GHz band, and
wherein to adjust the operation of the network device, the processing circuitry is configured to:
enable the first operating channel and disable the second operating channel; or
enable both of the first operating channel and the second operating channel.

8. The computing system of any of claims 1-7, wherein, to adjust the operation of the one or more of the network devices, the processing circuitry is configured to adjust one or more operational parameters affecting energy consumption of the network device.

9. The computing system of any of claims 1-8, wherein, to adjust the operation of the network device, the processing circuitry is configured to adjust at least one of:
an operational state of a packet processing unit of the network device;
a power budget for one or more packet processing units of the network device;
a clock frequency of a central processing unit, CPU, of the network device; or
a power level of an antennae or radio of the network device.

10. The computing system of any of claims 1-9, wherein the requirement comprises a network performance requirement, and
wherein the processing circuitry is configured to adjust the operation of the one or more network devices by adjusting one or more operational parameters that increase a network bandwidth throughput of the one or more network devices based on a prediction by the machine learning system of an increase in the network performance requirement for the next time interval as compared to a past network performance requirement for a previous time interval.

11. The computing system of any of claims 1-9, wherein the requirement comprises a network performance requirement, and
wherein the processing circuitry is configured to adjust the operation of the one or more network devices by adjusting one or more operational parameters that decrease a network bandwidth throughput of the one or more network devices based on a prediction by the machine learning system of a decrease in the network performance requirement for the next time interval as compared to a past network performance requirement for a previous time interval.

12. The computing system of any of claims 1-11, wherein the machine learning system is trained with historical time series data of the computing devices and the network devices.

13. A method comprising:
obtaining, by processing circuitry of a computing system, time series data comprising information about computing devices of a computer network, wherein the computing devices access other devices of the computer network via network devices that exchange network traffic of the computing devices;
applying, by the processing circuitry, a machine learning system, trained with historical time series data, to the obtained time series data to predict a requirement of one or more of the network devices for exchanging network traffic of the computing devices for a next time interval; and
adjusting, by the processing circuitry and based at least in part on the predicted requirement for the next time interval, operation of the one or more of the network devices.

14. The method of claim 13, further comprising steps corresponding to the functionality recited in any of claims 2-12.

15. Computer-readable media comprising instructions that, when executed by one or more programmable processors, cause the one or more programmable processors to become configured to carry out the method of any of claims 13-14.
